(19) Europäisches Patentamt
European Patent Office
Office européen des brevets

(11) Veröffentlichungsnummer : **0 133 843**
**B1**

# (12) EUROPÄISCHE PATENTSCHRIFT

(45) Veröffentlichungstag der Patentschrift : **29.07.87**

(51) Int. Cl.⁴ : **C 09 B 62/20**, C 09 B 62/503, C 09 B 62/02, D 06 P 3/66

(21) Anmeldenummer : **84810359.4**

(22) Anmeldetag : **23.07.84**

## (54) Reaktivfarbstoffe, deren Herstellung und Verwendung.

(30) Priorität : **29.07.83 CH 4170/83**

(43) Veröffentlichungstag der Anmeldung : **06.03.85 Patentblatt 85/10**

(45) Bekanntmachung des Hinweises auf die Patenterteilung : **29.07.87 Patentblatt 87/31**

(84) Benannte Vertragsstaaten : **CH DE FR GB IT LI**

(56) Entgegenhaltungen :
**FR-A- 2 167 635**
**US-A- 4 024 123**

(73) Patentinhaber : **CIBA-GEIGY AG**
**Klybeckstrasse 141**
**CH-4002 Basel (CH)**

(72) Erfinder : **Tzikas, Athanassios, Dr.**
**Muttenzerstrasse 78**
**CH-4133 Pratteln (CH)**

**EP 0 133 843 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere inbezug auf die Applikation, aufweisen.

Für das Färben von Baumwolle nach dem Kaltverweilverfahren werden heute Reaktivfarbstoffe gefordert, die eine ausreichende, der niedrigen Färbetemperatur angepasste Substantivität haben, und die zugleich eine gute Auswaschbarkeit der nicht fixierten Anteile aufweisen. Sie sollen ferner eine hohe Reaktivität besitzen, so dass nur kurze Verweilzeiten erforderlich sind, und sie sollen insbesondere Färbungen mit hohen Fixiergraden liefern. Von bekannten Farbstoffen werden diese Anforderungen nur in ungenügendem Masse erfüllt.

Der vorliegenden Erfindung lag daher die Aufgabe zugrunde, neue, verbesserte Reaktivfarbstoffe für das Kaltverweilverfahren zu finden, welche die oben charakterisierten Qualitäten in hohem Masse besitzen. Die neuen Farbstoffe sollten sich vor allem duch hohe Fixierausbeuten und hohe Faser-Farbstoff-Bindungsstabilitäten auszeichnen, und ausserdem sollten die nicht auf der Faser fixierten Anteile leicht auswachbar sein. Sie sollten ferner Färbungen mit guten Allgemeinechtheiten, beispielsweise Licht- und Nassechtheiten, ergeben.

Es hat sich gezeigt, dass mit den weiter unten definierten neuen bireaktiven Farbstoffen die gestellte Aufgabe gelöst wird.

Gegenstand der Erfindung sind Reaktivfarbstoffe der Formel

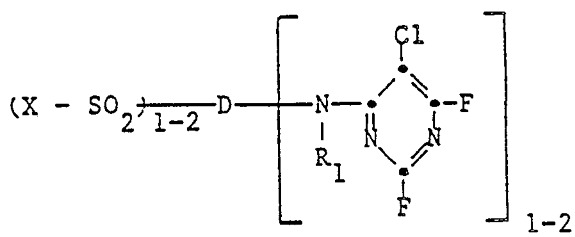

(I)

worin D der Rest eines Farbstoffes der Monoazo-, Metallkomplexazo-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Reihe, $R_1$ Wasserstoff oder ein gegebenenfalls substituierter $C_{1-4}$-Alkylrest, und X die Vinyl-, β-Sulfatoäthyl-, β-Thiosulfatoäthyl-, β-Chloräthyl- oder β-Acetoxyäthyl-Gruppe ist.

Der Rest D in Formel (1) kann in der üblichen Weise substituiert sein. Als Beispiele für weitere Substituenten am Rest D seien genannt Alkylgruppen mit 1 bis 4 Kohlenstoffatomen, wie Methyl, Aethyl, Propyl, Isopropyl oder Butyl, Akoxygruppen mit 1 bis 4 Kohlenstoffatomen, wie Methoxy, Aethoxy, Propoxy, Isopropoxy oder Butoxy, Acylaminogruppen mit 1 bis 8 Kohlenstoffatomen, wie Acetylamino, Propionylamino oder Benzoylamino, Amino, Alkylamino mit 1 bis 4 Kohlenstoffatomen, wie Methylamino, Aethylamino, Propylamino, Isopropylamino oder Butylamino, Phenylamino, N,N-Di-β-hydroxyäthylamino, N,N-Di-β-sulfatoäthylamino, Sulfobenzylamino, N,N-Disulfobenzylamino, Alkoxycarbonyl mit 1 bis 4 Kohlenstoffatomen im Alkoxyrest, wie Methoxycarbonyl oder Aethoxycarbonyl, Alkylsulfonyl mit 1 bis 4 Kohlenstoffatomen, wie Methylsulfonyl oder Aethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Aethylcarbamoyl, Sulfamoyl, N-Alkylsulfamoyl mit 1 bis 4 Kohlenstoffatomen, wie N-Methylsulfamoyl, N-Propylsulfamoyl, N-Isopropylsulfamoyl oder N-Butylsulfamoyl, N-(4-Hydroxyäthyl)-sulfamoyl, N,N-Di-(β-hydroxyäthyl)-sulfamoyl, N-Phenylsulfamoyl, Ureido, Hydroxy, Carboxy, Sulfomethyl oder Sulfo. Vorzugsweise enthält der Rest D eine oder mehrere Sulfonsäuregruppen. Reaktivfarbstoffe der Formel (1), worin D, der Rest eines Azofarbstoffes ist, enthalten als Substituenten vor allem Methyl, Aethyl, Methoxy, Aethoxy, Acetylamino, Benzoylamino, Amino, Chlor, Brom, Ureido, Hydroxy, Carboxy, Sulfomethyl oder Sulfo.

Der Rest $R_1$ ist, falls es sich um einen Alkylrest handelt, geradkettig oder verzweigt; er kann weitersubstituiert sein, z. B. durch Halogen, Hydroxy, Cyan, $C_{1-4}$-Alkoxy, Carboxy oder Sulfo. Als Beispiele für $R_1$ und $R_2$ seien die folgenden Reste genannt: Methyl, Aethyl, Propyl, Isopropyl, Butyl, Isobutyl, sek.-Butyl, tert.-Butyl, Carboxymethyl, β-Carboxyäthyl, β-Carboxypropyl, Methoxycarbonylmethyl, Aethoxycarbonylmethyl, β-Methoxyäthyl, β-Aethoxyäthyl, β-Methoxypropyl, β-Chloräthyl, γ-Brompropyl, β-Hydroxyäthyl, β-Hydroxybutyl, β-Cyanäthyl, Sulfomethyl, β-Sulfoäthyl, Aminosulfonylmethyl und β-Sulfatoäthyl. Vorzugsweise ist $R_1$ Wasserstoff, Methyl oder Aethyl.

Bevorzugt sind Reaktivfarbstoffe der Formel (1), worin D der Rest eines Monoazofarbstoffes oder eines entsprechenden Metallkomplexazofarbstoffes ist. In diesem Falle sind die Reaktivreste, d. h. der Vinyl- oder β-Sulfatoäthyl- etc. -sulfonylrest und der 2,4-Difluor-5-chlorpyrimidylrest an verschiedene oder

an gleiche Reste von Ausgangskomponenten, nämlich Diazo- und Kupplungskomponenten, gebunden. Die Reaktivfarbstoffe haben dann z. B. die Formel

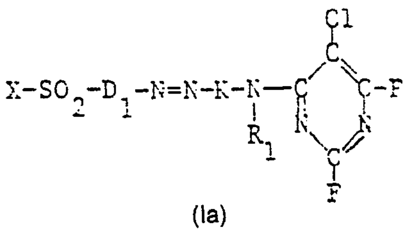

oder

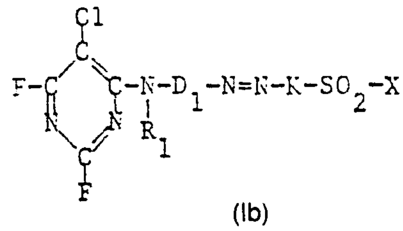

(Ia) (Ib)

worin $R_1$ und X die unter Formel (1) angegebenen Bedeutungen haben, und $D_1$ der Rest einer Diazokomponente, und K der Rest einer Kupplungskomponente ist. Falls zwei X—$SO_2$-Reaktivreste vorhanden sind, so sind diese insbesondere an den Rest der Diazokomponente gebunden ; und für den Fall, dass das Farbstoffmolekül zwei 2,4-Difluor-5-chlorpyrimidylreste enthält, befinden sich diese vorzugsweise in der Kupplungskomponente. Es sind somit, entsprechend den Indizes, welche den Reaktivresten in Formel (1) angefügt sind, auch tri- und tetrareaktive Farbstoffe in Betracht zu ziehen. Die obigen Erläuterungen gelten sinngemäss auch für Metallkomplexazofarbstoffe.

In Betracht zu ziehen sind ferner auch Reaktivfarbstoffe der Formel (1) worin einer der Reaktivreste oder beide über einen Rest der Formel

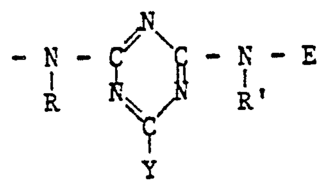

an den Chromophor gebunden sind. Dabei ist der Rest X—$SO_2$— bzw. der 2,4-Difluor-5-chlorpyrimidylaminorest an E gebunden ; E ist ein gegebenenfalls substituiertes aliphatisches oder aromatisches Brückenglied. Das Brückenglied E ist vorzugsweise ein Alkylen- oder Arylenrest. So kann E ein langer (z. B. mit 10 oder mehr Kohlenstoffatomen) oder kürzerer, geradkettiger oder verzweigter Alkylenrest sein ; insbesondere kommt ein Alkylenrest mit 2 bis 6 Kohlenstoffatomen in Betracht, z. B. Aethylen, Propylen, Butylen, Hexylen oder Cyclohexylen. Als Arylenrest ist E z. B. ein Naphthylenrest, der Rest eines Diphenyls oder Stilbens oder insbesondere ein Phenylenrest. Der Rest E kann weitere Substituenten enthalten, z. B. Halogenatome, wie Fluor, Chlor und Brom, Alkylgruppen mit 1 bis 4 Kohlenstoffatomen, wie Methoxy, Aethoxy, Propyloxy und Isopropyloxy, Carboxy oder Sulfo. R und R' sind unabhängig voneinander Wasserstoff oder ein gegebenenfalls substituierter $C_{1-4}$-Alkylrest ; und Y ist ein Halogenatom, eine gegebenenfalls substituierte Aminogruppe, Hydroxy, eine Alkoxy-, Aryloxy-, Alkylthio- oder Arylthiogruppe.

Bevorzugt sind :

Reaktivfarbstoffe der Formel

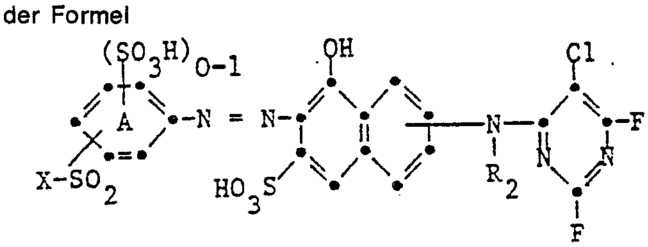

(2)

worin $R_2$ Wasserstoff, Methyl oder Aethyl ist, X die unter Formel (1) angegebene Bedeutung hat, und der Benzolring A gegebenenfalls weitersubstituiert ist :

Reaktivfarbstoffe der Formel

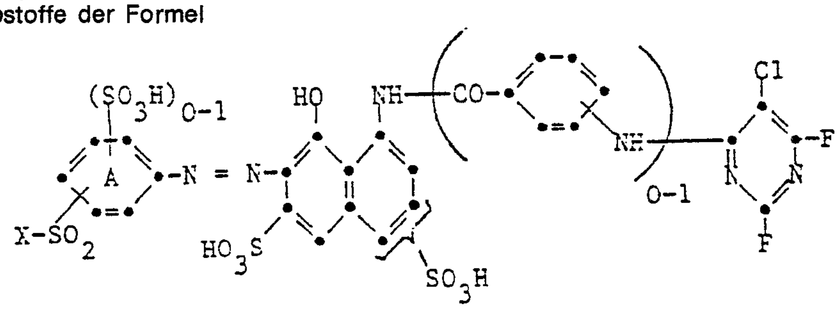

(3)

worin X die unter Formel (1) angegebene Bedeutung hat, und der Benzolring A gegebenenfalls weitersubstituiert ist ;

Reaktivfarbstoffe der Formel

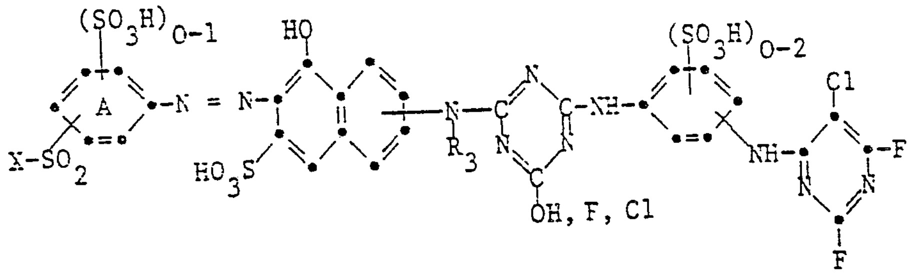

(4)

worin $R_3$ Wasserstoff, Methyl oder Aethyl ist, X die unter Formel (1) angegebene Bedeutung hat, und der Benzolring A gegebenenfalls weiter substituiert ist ;

Reaktivfarbstoffe der Formel

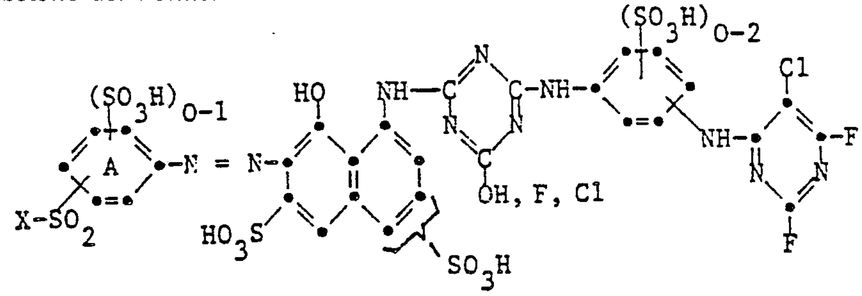

(5)

worin X die unter Formel (1) angegebene Bedeutung hat, und der Benzolring A gegebenenfalls weitersubstituiert ist.

Bevorzugt sind weiterhin Reaktivfarbstoffe der Formeln (2) bis (5), worin die Benzolringe A nicht weitersubstituiert sind, und/oder worin X die Vinyl- oder β-Sulfatoäthyl-Gruppe ist.

Das Verfahren zur Herstellung der Reaktivfarbstoffe der Formel (1) ist dadurch gekennzeichnet, dass man Farbstoffe der Formel

$$(X - SO_2 \xrightarrow{}_{1-2} D \left[ \begin{matrix} NH \\ | \\ R_1 \end{matrix} \right]_{1-2} \qquad (6)$$

worin D, $R_1$ und X die unter Formel (1) angegebenen Bedeutungen haben, oder ihre Vorprodukte mit 2,4,6-Trifluor-5-chlorpyrimidin zu Reaktivfarbstoffen der Formel (1) umsetzt, oder die erhaltenen Zwischenprodukte in die gewünschten Endfarbstoffe überführt, und gegebenenfalls eine weitere Umwandlungsreaktion anschliesst.

Man geht somit von Farbstoffen aus, die eine X—$SO_2$-Gruppe bereits enthalten, und acyliert die Gruppe —$N(R_1)H$ mit 2,4,6-Trifluor-5-chlorpyrimidin ; oder man verwendet entsprechende Vorprodukte, z. B. eine Diazokomponente der Formel

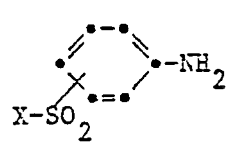

(7)

und kuppelt diese auf eine Kupplungskomponente, welche eine Gruppe —$N(R_1)H$ enthält, und acyliert die Gruppe —$N(R_1)H$ vor oder nach der Kupplung mit 2,4,6-Trifluor-5-chlorpyrimidin. Bei der oben beschriebenen Ausführungsform kann die acylierbare Gruppe —$N(R_1)H$ auch in der Diazokomponente vorhanden sein, und dementsprechend die X—$SO_2$-Gruppe in der Kupplungskomponente. Man verwendet in diesem Falle als Diazokomponenten vor allem die 1,3-Phenylendiamin-4-sulfonsäure, 1,4-Phenylendiamin-2-sulfonsäure, 1,4-Phenylendiamin-2,5-disulfonsäure oder 1,3-Phenylendiamin-4,6-disulfonsäure. Gegebenenfalls verwendet man entsprechende Acetylamino- oder Nitroverbindungen, worin die Acetylamino- bzw- Nitrogruppe vor der Kondensation mit dem 2,4,6-Trifluor-5-chlorpyrimidin durch Verseifen bzw. Reduzieren in die $H_2N$-Gruppe übergeführt wird. Die Stellung der Reaktivreste im fertigen Azofarbstoff ist somit nicht unveränderlich an bestimmte Ausgangskomponenten-Diazo- oder Kupplungskomponenten-gebunden.

Ferner können die beiden Reaktivreste auch an ein und dieselbe Komponente gebunden sein, beispielsweise indem man eine nichtfaserreaktive Diazokomponente sowie eine Kupplungskomponente der Formel

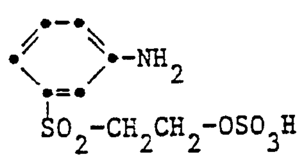

(8)

verwendet, und die $—NH_2$ Gruppe nach der Kupplung mit 2,4,6-Trifluor-5-chlorpyrimidin acyliert.

Die Verfahrensvariante, bei welcher man von Farbstoffvorprodukten ausgeht, ist geeignet zur Herstellung von Reaktivfarbstoffen der Formel (1), worin D der Rest eines aus zwei oder mehr als zwei Komponenten zusammengesezten Farbstoffes ist. Beispiel für derartige, aus zwei oder mehr als zwei Komponenten zusammengesetzte Farbstoffe sind : Monoazo-, Metallkomplexazo-, Formazan- und Azomethinfarbstoffe. Bei der Herstellung der Endfarbstoffe aus Vorprodukten handelt es sich meistens um Kupplungen, die zu Azofarbstoffen führen.

Grundsätzlich lassen sich die Reaktivfarbstoffe der Formel (1) sämtlicher Farbstoffklassen in an sich bekannter Weise oder analog zu bekannten Verfahrensweisen herstellen, indem man von Vorprodukten oder Zwischenprodukten für Farbstoffe, die faserreaktive Reste gemäss Formel (1) enthalten, ausgeht, oder diese faserreaktiven Reste in hierfür geeignete Zwischenprodukte mit Farbstoffcharakter einführt.

Eine andere vorteilhafte Methode besteht darin, zunächst einen Farbstoff herzustellen, der eine Vorstufe des Reaktivrestes enthält, und diese nachträglich in die Endstufe umzuwandeln, z. B. durch Veresterung oder eine Additionsreaktion. Beispielsweise kann man einen Farbstoff der Formel (6), worin X ein Rest $HO—CH_2CH_2—$ ist, herstellen und das Zwischenprodukt vor oder nach der Acylierung mit Schwefelsäure umsetzen, so dass die Hydroxygruppe in die Sulfatogruppe überführt wird ; oder man verwendet einen analogen Farbstoff, worin X die Vinylgruppe $H_2C{=}CH—$ ist, und lagert an das Zwischenprodukt Thioschwefelsäure an, wobei ein Rest $HO_3SS—CH_2CH_2—$ entsteht. Die Sulfatierung der Hydroxygruppe in einem Farbstoff der Formel (6) oder einem geeigneten Vorproduktk, erfolgt z. B. durch Umsetzung mit konzentrierter Schwefelsäure bei 0 °C bis mässig erhöhter Temperatur. Die Sulfatierung kann auch durch Reaktion der Hydroxyverbindung mit 2 Aequivalenten Chlorsulfonsäure pro Hydroxygruppe in einem polaren organischen Lösungsmittel, wie beispielsweise N-Methylpyrrolidon, bei 10 bis 80 °C erfolgen. Vorzugsweise erfolgt die Sulfatierung durch Eintragen der betreffenden Verbindung in Schwefelsäuremonohydrat bei Temperaturen zwischen 5 und 15 °C. Die Einführung eines anderen unter alkalischen Bedingungen abspaltbaren Restes für X in eine Verbindung der Formel (1) oder ein Zwischenprodukt anstelle der Sulfatogruppe, beispielsweise einer Thiosulfatogruppe erfolgt in an sich bekannter Weise.

Ausserdem können Eliminierungsreaktionen an die Synthese angeschlossen werden. Beispielsweise kann man Reaktivfarbstoffe der Formel (1), welche Sulfatoäthylsulfonylreste enthalten, mit säureabspaltenden Mitteln, wie Natriumhydroxid, behandeln, wobei die Sulfatoäthylsulfonylreste in Vinylsulfonylreste übergehen.

Der oben beschriebene Weg der Herstellung über eine Zwischenstufe des Reaktivrestes geht in vielen Fällen einheitlich und vollständig.

Liegen in den hergestellten Reaktivfarbstoffen zur Metallkomplexbildung befähigte Gruppen vor, können die Reaktivfarbstoffe auch nachträglich metallisiert werden.

Da die einzelnen oben angegebenen Verfahrensschritte in unterschiedlicher Reihefolge ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet. Da unter bestimmten Voraussetzungen Hydrolyse des 2,4-Difluor-5-chlorpyrimidylrestes eintritt, muss ein Zwischenprodukt, welches Acetylaminogruppen enthält, zwecks Abspaltung der Acetylgruppen verseift werden, bevor mit einem 2,4,6-Trifluor-5-chlorpyrimidin kondensiert wird. Welche Teilreaktion zweckmässigerweise zuerst ausgeführt wird, ist von Fall zu Fall verschieden und richtet sich vor allem nach der Löslichkeit der beteiligten Aminoverbindungen und der Basizität der zu acylierenden Aminogruppen. Die Acylierung der Farbstoffe der Formel (6) oder der Farbstoffvorprodukte mit 2,4,6-Trifluor-5-chlorpyrimidin erfolgt nach an sich bekannten Methoden, vorzugsweise in wässriger Lösung oder Suspension und in Gegenwart von alkalischen, säurebindenden Mitteln, z. B. wässriger Alkalihydroxide, -carbonate oder -bicarbonate.

Die wichtigsten Verfahrensvarianten sind in den Ausführungsbeispielen dargestellt.

Im folgenden sollen mögliche Ausgangsstoffe, die zur Herstellung der Reaktivfarbstoffe der Formel (1) verwendet werden können, einzeln genannt werden.

Als Farbstoffe der Formel (6) kommen besonders Farbstoffe der folgenden Strukturtypen in Betracht :

(Siehe Formeln Seite 6 ff.)

Geht man zur Herstellung der bevorzugten Reaktivfarbstoffe der Formel (1), worin D der Rest eines Azofarbstoffes ist, nicht von den fertigen Aminofarbstoffen, z. B. solchen die weiter vorn beschrieben sind, sondern von Farbstoffvorprodukten, d. h. den Diazo- und Kupplungskomponenten aus, muss eine der beiden Komponenten mindestens eine acylierbare Aminogruppe und die andere mindestens eine

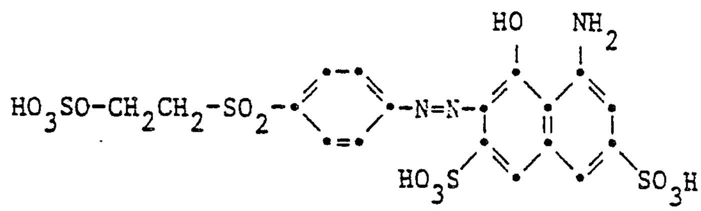

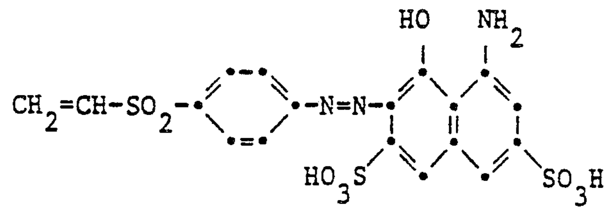

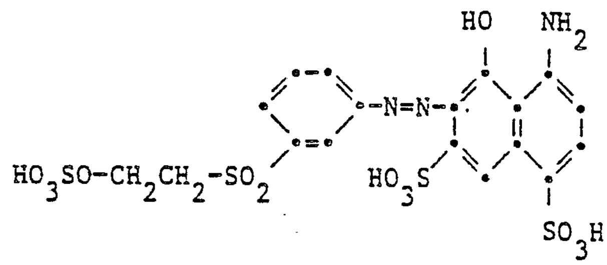

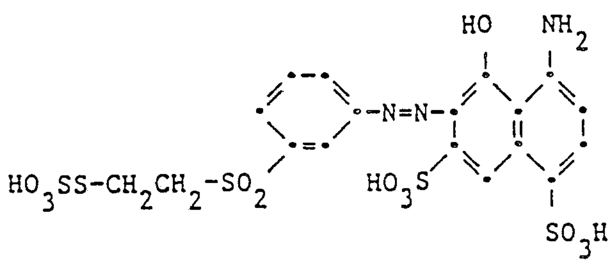

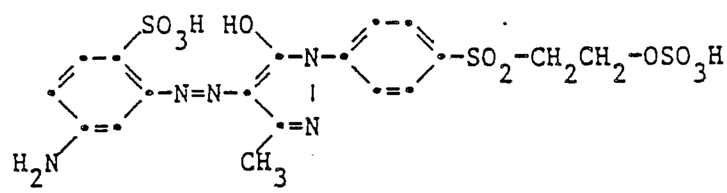

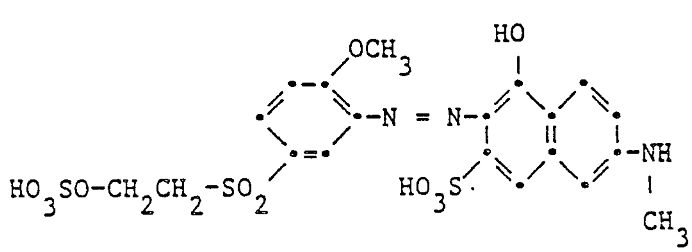

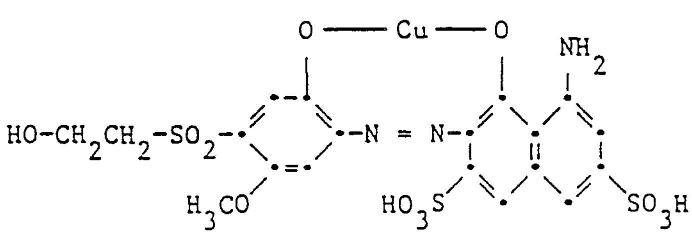

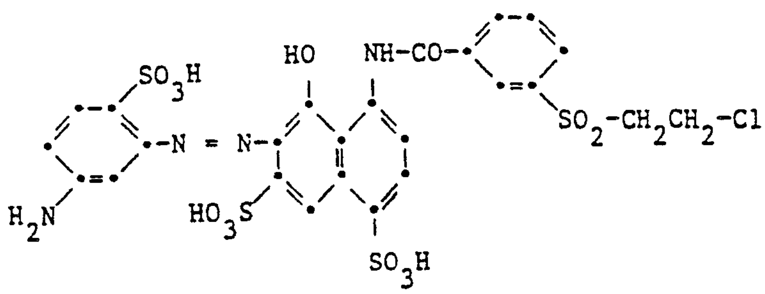

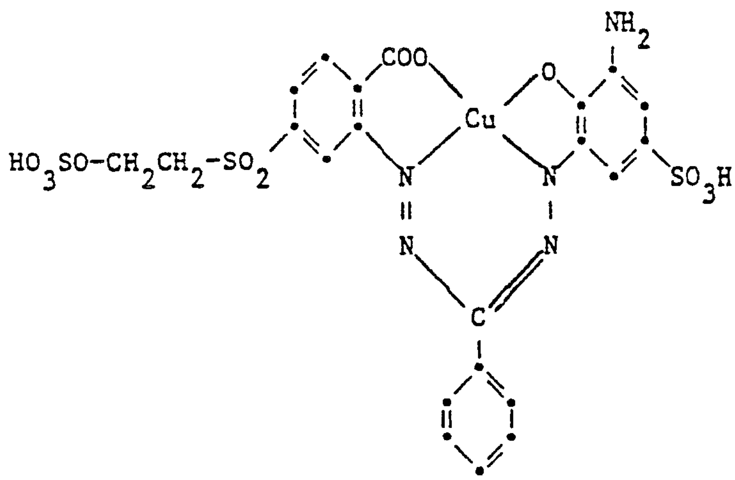

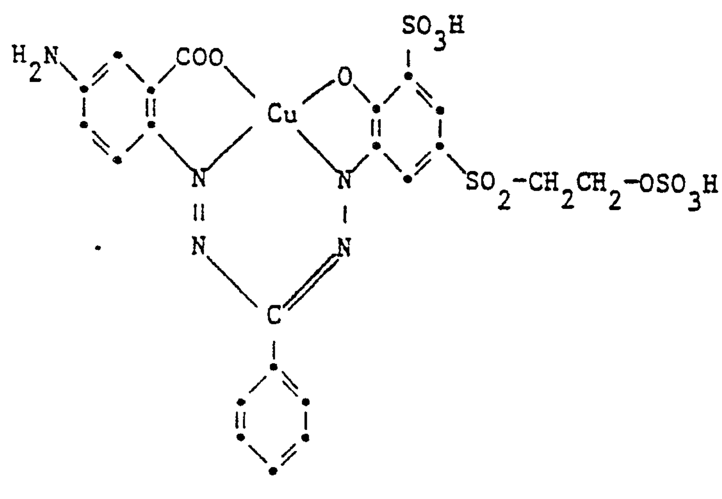

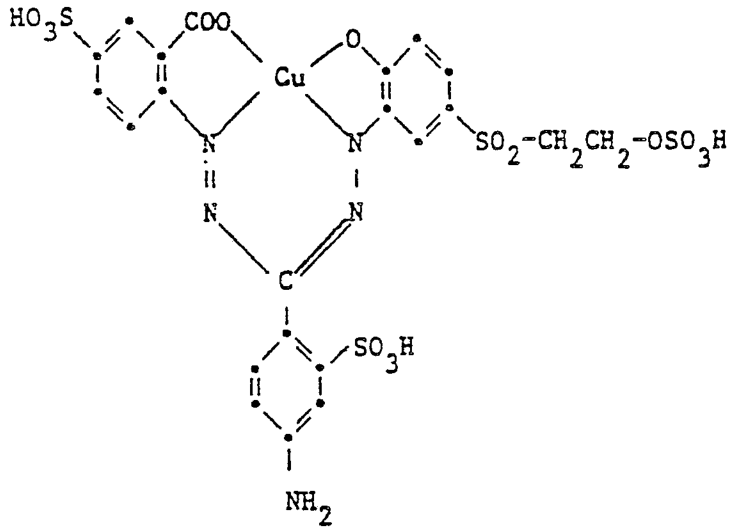

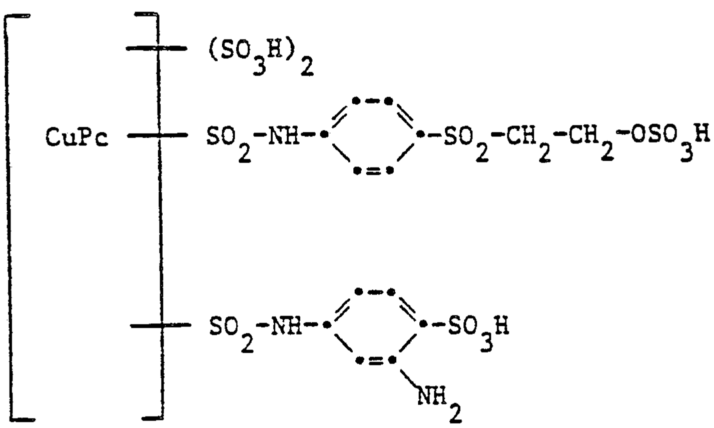

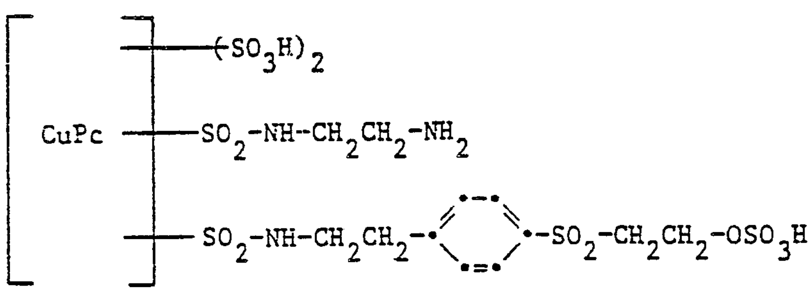

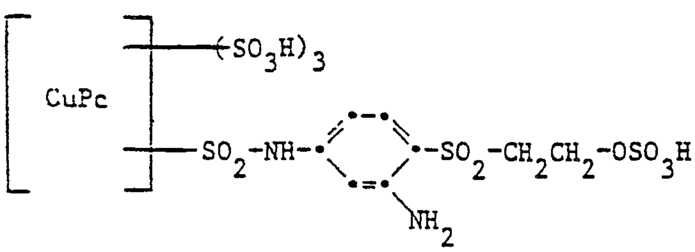

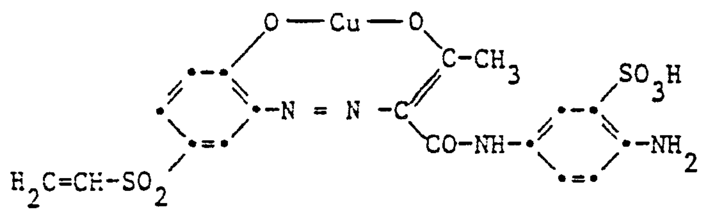

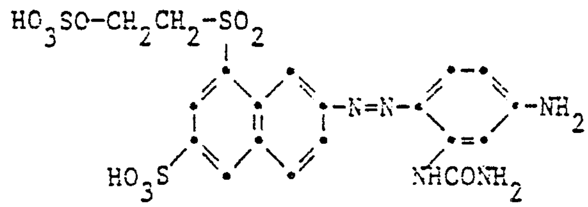

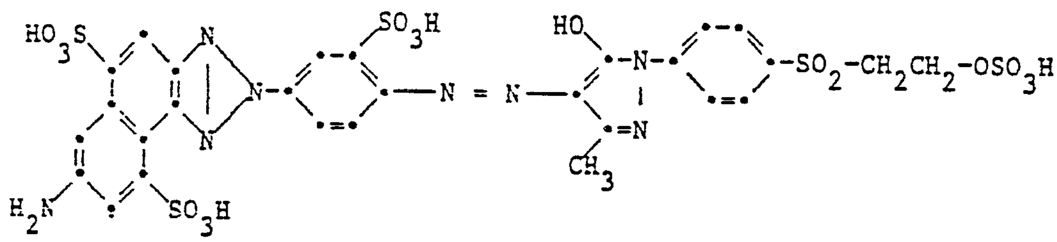

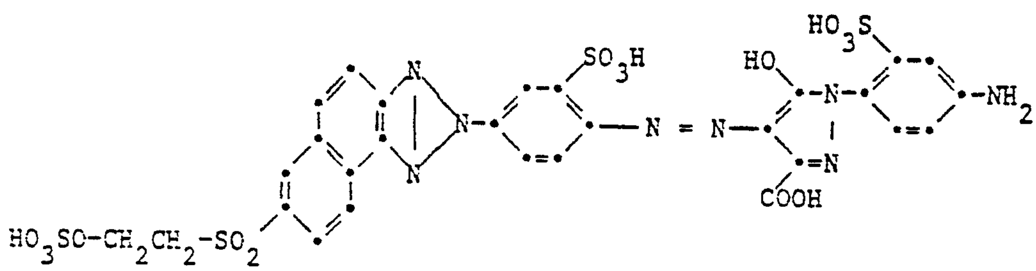

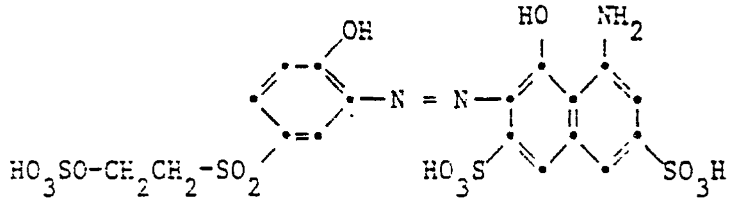

1:2-Chromkomplex

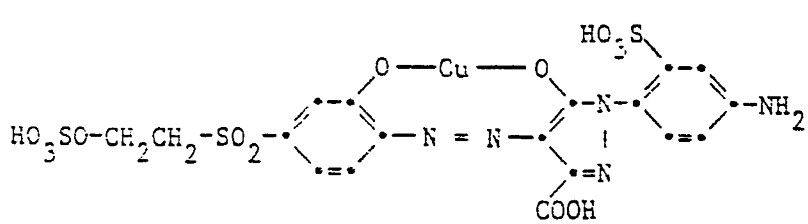

Gruppe X—$SO_2$— aufweisen. Als Diazokomponenten kommen vorwiegend geeignete Verbindungen aus der Aminobenzol- und Aminonaphthalinreihe in Betracht, beispielsweise solche, die in den Azofarbstoffen der oben angegebenen Formeln enthalten sind, wie 1,3-Diaminobenzol, 1,4-Diaminobenzol, 1,3-Diamino-4-chlorbenzol, 1,3-Diamino-4-methylbenzol, 1,3-Diamino-4-äthylbenzol, 1,3-Diamino-4-methoxybenzol, 1,3-Diamino-4-äthoxybenzol, 1,4-Diamino-2-methylbenzol, 1,4-Diamino-2-methoxybenzol, 1,4-Diamino-2-äthoxybenzol, 1,4-Diamino-2-chlorbenzol, 1,4-Diamino-2,5-dimethylbenzol, 1,4-Diamino-2,5-diäthylbenzol, 1,4-Diamino-2-methyl-5-methoxybenzol, 1,4-Diamino-2,5-dimethoxybenzol, 1,4-Diamino-2,5-diäthoxybenzol, 2,6-Diaminonaphthalin, 1,3-Diamino-2,4,6-trimethylbenzol, 1,4-Diamino-2,3,5,6-tetramethylbenzol, 1,3-Diamino-4-nitrobenzol, 4,4'-Diaminostilben, 4,4'-Diaminodiphenylmethan, 4,4'-Diaminobiphenyl (Benzidin), 3,3'-Dimethylbenzidin, 3,3'-Dimethoxybenzidin, 3,3'-Dichlorbenzidin, 3,3'-Dicarboxybenzidin, 3,3'-Dicarboxymethoxybenzidin, 2,2'-Dimethylbenzidin, 4,2'-Diaminodiphenyl (Diphenylin), 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 3-(3'-bzw. 4'-Aminobenzoylamino)-1-aminobenzol-6-sulfonsäure, 1-(4'-Aminobenzoylamino)-4-aminobenzol-2,5-disulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure, 1,4-Diamino-2-methylbenzol, 4,4'-Diaminodiphenyloxid, 4,4'-Diaminodiphenylharnstoff-2,2'-disulfonsäure, 4,4'-Diaminodiphenyloxyäthan-2,2'-disulfonsäure, 4,4'-Diaminostilben-2,2'-disulfonsäure, 4,4'-Diaminodiphenyläthan-2,2'-disulfonsäure, 2-Amino-5-aminomethylnaphthalin-1-sulfonsäure, 2-Amino-5-aminomethylnaphthalin-1,7-disulfonsäure, 1-Amino-4-methoxy-5-aminomethylbenzol-6-sulfonsäure, 1,3,5-Triaminobenzol.

Aromatische Amine; die als Diazokomponenten zur Herstellung der Mono- oder Disazofarbstoffe dienen können, und die eine Gruppe der Formel X—$SO_2$- ein- oder zweimal gebunden enthalten, sind z. B. :

1-Amino-4-β-sulfatoäthylsulfonylbenzol, 1-Amino-4-β-thiosulfatoäthylsulfonylbenzol, 1-Amino-4-vinylsulfonylbenzol, 1-Amino-4-β-chloräthylsulfonylbenzol, 1-Amino-3-β-sulfatoäthylsulfonylbenzol, 1-Amino-3-vinylsulfonylbenzol, 1-Amino-2-methoxy-5-β-sulfatoäthylsulfonylbenzol, 1-Amino-2-methoxy-5-β-thiosulfatoäthylsulfonylbenzol, 1-Amino-2-methoxy-5-vinylsulfonylbenzol, 1-Amino-4-methoxy-3-β-sulfatoäthylsulfonylbenzol, 1-Amino-4-methoxy-3-β-vinylsulfonylbenzol, 1-Amino-2,5-dimethoxy-4-β-sulfatoäthylsulfonylbenzol, 1-Amino-2,5-dimethoxy-4-vinylsulfonylbenzol, 1-Amino-2-methoxy-4-β-sulfatoäthylsulfonyl-5-methylbenzol, 1-Amino-2-methoxy-4-vinylsulfonyl-5-methylbenzol, 1-Amino-3-β-sulfatoäthylsulfonyl-6-carboxybenzol, 1-Amino-3-vinylsulfonyl-6-carboxybenzol, 1-Amino-4-β-sulfatoäthylsulfonylbenzol-2-sulfonsäure, 1-Amino-4-vinylsulfonylbenzol-2-sulfonsäure, 1-Amino-5-vinylsulfonylbenzol-2,4-disulfonsäure, 1-Amino-2-hydroxy-5-β-sulfatoäthylsulfonylbenzol, 1-Amino-2-hydroxy-4-β-sulfatoäthylsulfonylbenzol, 1-Amino-2-hydroxy-5-β-sulfatoäthylsulfonylbenzol-3-sulfonsäure, 1-Amino-2-brom-4-β-sulfatoäthylsulfonylbenzol, 1-Amino-2,6-dichlor-4-β-sulfatoäthylsulfonylbenzol, 1-Amino-2,4-di-(β-sulfatoäthylsulfonyl)-benzol, 1-Amino-2,4-di-(β-sulfatoäthylsulfonyl)-5-chlorbenzol, 1-Amino-2,4-di-(β-thiosulfatoäthylsulfonyl)-5-chlorbenzol, 1-Amino-2,4-di-(vinylsulfonyl)-benzol, 1-Amino-2,4-di-(vinylsulfonyl)-5-chlorbenzol, 1-Amino-2,4-di-(β-acetoxyäthylsulfonyl)-benzol, 1-Amino-2,4-di-(β-acetoxyäthylsulfonyl)-5-chlorbenzol, 2-Amino-8-β-sulfatoäthylsulfonylnaphthalin, 2-Amino-6-β-sulfatoäthylnaphthalin, 2-Amino-6β-sulfatoäthylsulfonylnaphthalin-1-sulfonsäure, 2-Amino-8-β-sulfatoäthylsulfonylnaphthalin-6-sulfonsäure, 2-Amino-6,8-di-(β-sulfatoäthylsulfonyl)-naphthalin.

Ferner sind zu erwähnen die entsprechenden β-Hydroxy-verbindungen, welche als Vorprodukte verwendet werden können, z. B. : 1-Amino-4-β-hydroxyäthylsulfonylbenzol, 1-Amino-3-β-hydroxyäthylsulfonylbenzol, 1-Amino-2,4-di-(β-hydroxyäthylsulfonyl)-benzol und 1-Amino-2,4-di-(β-hydroxyäthylsulfonyl)-5-chlorbenzol.

Wenn als Diazokomponente statt eines Diamins eine Amino-acetylamino-verbindung eingesetzt werden soll, aus welcher nachträglich die Acetylgruppe durch Verseifen wieder abgespalten wird, wie dies oben bei der Erläuterung des Verfahrens erwähnt ist, kommen die Monoacetylverbindungen der oben genannten Diazokomponenten in Frage, z. B. 1-Acetylamino-3-aminobenzol-4-sulfonsäure oder 1-Acetylamino-4-aminobenzol-3-sulfonsäure.

Die Kupplungskomponenten sind vor allem geeignete Verbindungen der Aminobenzol- und Naphthalinreihe, z. B. Aniline, N-mono-substituierte Aniline, m-Phenylendiaminderivate, Aminonaphthaline, Naphthole, Aminonaphthalinsulfonsäure, Naphtholsulfonsäuren oder Aminonaphtholsulfonsäuren, ferner Pyrazolone, Aminopyrazole, Aminopyridine, Hydroxypyridine/pyridone, Aminopyrimidine, Hydroxypyrimidine, Indole, Barbitursäurederivate oder Acetoacetarylide. Als Beispiele seien genannt :

1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 2-Amino-5-hydroxynaphthalin-7-sulfonsäure, 2-Methyl- bzw. 2-Aethylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. 2-Aethylamino-8-hydroxynaphthalin-6-sulfonsäure, 2-Amino-8-hydroxynaphthalin-3,6-disulfonsäure, 1-Amino-5-hydroxynaphthalin-7-sulfonsäure, 1-Amino-8-hydroxynaphthalin-3,6- bzw. -4,6-disulfonsäure, 1-(4'-Aminobenzoylamino)-8-hydroxynaphthalin-3,6- bzw. -4,6-disulfonsäure, 2-(4'-Amino-3'-sulfophenylamino)-5-hydroxynaphthalin-7-sulfonsäure, 1-Amino-8-hydroxynaphthalin-4-sulfonsäure, 2,4,6-Triamino-3-cyanpyridin, 1-β-Aminoäthyl-3-cyan-4-methyl-6-hydroxypyridon-(2), 1-γ-Aminopropyl-3-sulfomethyl-4-methyl-6-hydroxypyridon-(2), 1,3-Diaminobenzol, 1-Amino-3-(N,N-di-β-hydroxyäthylamino)-benzol, 1-Amino-3-(N,N-di-β-sulfatoäthylamino)-benzol, 1-Amino-3-(N,N-di-β-hydroxyäthylamino)-4-methoxy-benzol, 1-Amino-3-(N,N-di-β-sulfatoäthylamino)-4-methoxybenzol, 1-Amino-3-sulfobenzylaminobenzol, 1-Amino-3-sulfo-benzylamino-4-chlorbenzol, 1-Amino-3-(N,N-di-sulfo-benzylamino)-benzol, 1-(3'-Aminophenyl)-3-methyl-5-pyrazolon sowie 1-(Aminophenyl)-3-carboxy-5-pyrazolone, die im Phenylkern durch Chlor, Methyl, Methoxy, Nitro oder Sulfo substituiert sein können, wie 1-(2'-Sulfo-4'-aminophenyl)-3-carboxy-pyrazolon-(5).

Falls eine der beiden Komponenten beide Reaktivgruppen zugleich enthält, oder diese in die betreffende Komponente eingeführt werden können, wie bei den Kupplungskomponenten der Formeln

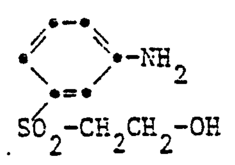

und

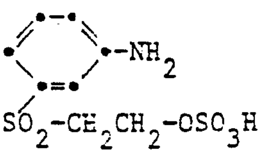

kann die andere Komponente, in diesem Falle die Diazokomponente, auch nichtreaktiv sein, Beispiele sind :

Aminobenzol, 1-Amino-2-, -3- oder -4-methylbenzol, 1-Amino-2-, -3- oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 1-Aminobiphenyl, 2-Aminodiphenyläther, 1-Amino-benzol-2-, -3- oder -4-sulfonsäureamid, 1-Aminobenzol-2-, -3- oder -4-carbonsäure, Dehydrothio-p-toluidin-sulfonsäure, 1-Amino-3-trifluormethylbenzol-6-sulfonsäure, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfonsäure, 1-Amino-2-carboxy-benzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3- oder -4-sulfonsäure, 1-Amino-3,4-dichlorbenzol-6-sulfonsäure, 1-Amino-2,5-dichlorbenzol-6-sulfonsäure, 1-Amino-2,5-dichlorbenzol-4-sulfonsäure, 1-Amino-4-methyl-5-chlorbenzol-2-sulfonsäure, 1-Amino-5-methyl-4-chlorbenzol-2-sulfonsäure, 1-Amino-4- oder -5-methoxy-benzol-2-sulfonsäure, 1-Amino-6-methoxybenzol-3- oder -4-sulfonsäure, 1-Amino-6-äthoxybenzol-3- oder -4-sulfonsäure, 1-Amino-2,4-dimethoxybenzol-6-sulfonsäure, 1-Amino-2,5-dimethoxybenzol-6-sulfonsäure, 1-Amino-2,5-dimethoxybenzol-4-sulfonsäure, 1-Amino-3-acetylaminobenzol-6-sulfonsäure, 1-Amino-4-acetylaminobenzol-2-sulfonsäure, 1-Amino-3-acetylamino-4-methylbenzol-6-sulfonsäure, 2-Amino-1-methylbenzol-3,5-disulfonsäure, 1-Amino-4-methoxybenzol-2,5-disulfonsäure, 1-Amino-3- oder -4-nitrobenzol-6-sulfonsäure, 1-Aminonaphthalin, 2-Aminonaphthalin, 1-Aminonaohthalin-2-, -4-, -5-, -6-, -7- oder -8-sulfonsäure, 2-Aminonaphthalin-1-, -3-, -4-, -5-, -6-, -7- oder -8-sulfonsäure, 2-Aminonaphthalin-3,6-oder -5,7-disulfonsäure, 1-Aminonaphthalin-3,6- oder -5,7-disulfonsäure, 2-Aminonaphthalin-1,5-, -1,7-, -3,6-, -5,7-, -4,8- oder -6,8-disulfonsäure, 1-Aminonaphthalin-2,5,7-trisulfonsäure, 2-Aminonaphthalin-1,5-,7-, -3,6,8- oder -4,6,8-trisulfonsäure, 1-Hydroxy-2-aminobenzol-4-sulfonsäure, 1-Hydroxy-2-aminobenzol-5-sulfonsäure, 1-Hydroxy-2-aminobenzol-5-sulfonsäure, 1-Hydroxy-2-aminobenzol-4,6-disulfonsäure, 1-Hydroxy-2-amino-4-acetylaminobenzol-6-sulfonsäure, 1-Hydroxy-2-amino-6-acetylaminobenzol-4-sulfonsäure, 1-Hydroxy-2-amino-4-chlorbenzol-5-sulfonsäure, 1-Hydroxy-2-amino-4-methylsulfonylbenzol, 1-Amino-2-hydroxy-6-nitronaphthalin-6-sulfonsäure, 2-Amino-1-hydroxynaphthalin-4,8-disulfonsäure, 4-Aminoazobenzol-3,4'-disulfonsäure, 3-Methoxy-4-amino-6-methylazobenzol-2',4'-disulfonsäure, 3-Methoxy-4-amino-6-methylazobenzol-2',5'-disulfonsäure.

Die Diazotierung der eine diazotierbare Aminogruppe enthaltenden Zwischenprodukte erfolgt in der Regel durch Einwirkung salpetriger Säure in wässrig-mineralsaurer Lösung bei tiefer Temperatur, die Kupplung bei schwach sauren, neutralen bis schwach alkalischen pH-Werten.

Die Kondensation des 2,4,6-Trifluor-5-chlorpyrimidins mit den Diazokomponenten oder den Kupplungskomponenten bzw. mit acylierbaren Monoazo-Zwischenprodukten bzw. mit den aminogruppenhaltigen Farbstoffen der Formel (6) oder deren Vorprodukten erfolgen vorzugsweise in wässriger Lösung oder Suspension, bei niedriger Temperatur und bei schwach saurem, neutralem bis schwach alkalischem pH-Wert. Vorteilhaft wird der bei der Kondensation freiwerdende Fluorwasserstoff laufend durch Zugabe wässriger Alkalihydroxyde, -carbonate oder -bicarbonate neutralisiert.

Die Reaktivfarbstoffe der Formel (1) sind faserreaktiv. Unter faserreaktiven Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagiren vermögen.

Die Reaktivfarbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürliche Cellulosefarser, wie Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Mischgeweben enthalten sind, z. B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulardfärbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. besonders geeignet sind sie für das sogenannte Kaltverweilvefahren, wonach der Farbstoff zusammen mit dem Alkali auf dem Foulard aufgebracht wird. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die Reaktivfarbstoffe der Formel (1) zeichnen sich durch hohe Reaktivität und gutes Fixiervermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d. h. der Seifverlust sehr gering ist. Die Reaktivfarbstoffe der Formel (1) eignen sich auch zum Druck, vor allem auf Baumwolle, ebenso aber auch zum Bedrucken von stickstoffhaltigen Fasern, z. B. von Wolle, Seide oder Wolle enthaltenden Mischgeweben.

Die mit den erfindungsgemässen Farbstoffen hergestellten Färbungen und Drucke zeichnen sich durch klare Nuancen aus. Insbesondere besitzen die Färbungen und Drucke auf Cellulosefasermaterialien eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

In der FR-A-2 167 635 ist ein Anthrachinonfarbstoff beschrieben, der einen Difluor-chlor-pyrimidin-Rest und einen β-Sulfatoäthylsulfonylrest enthält. In der EP-A-0 031 099 sind Farbstoffe beschrieben, welche einen Chlortriazin- oder Chlorpyrimidin-Reaktivrest und einen Alkenylsulfonylrest, worin das Alkenyl mindestens 3 C-Atome aufweist, enthalten. In der EP-A-0 084 314 sind H(K)-Säure-disazofarbstoffe beschrieben, die in der ersten Diazokomponente einen β-Sulfatoäthylsulfonyl- oder Vinylsulfonyl-Rest und in der zweiten Diazokomponente einen Difluor-chlor-pyrimidinrest enthalten.

Die nachfolgenden Beispiele dienen zur Erläuterung der Erfindung. Die Temperaturen sind in Celsiusgraden angegeben. Die Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Die Herstellung der Monoazo-Zwischenverbindungen ist in den nachfolgenden Ausführungsbeispielen nicht in allen Fällen beschrieben, sie ergibt sich jedoch ohne weiteres aus der allgemeinen Beschreibung.

## Beispiel 1

64 Teile 1-Amino-8-naphthol-3,6-disulfonsäure werden in 800 Teilen Wasser unter Zusatz von 30 %iger Natriumhydroxidlösung bei pH 9,0 bis 9,5 gelöst. Man kühlt dann auf 10 °C ab und lässt 34 Teile 2,4,6-Trifluor-5-chlorpyrimidin zutropfen, wobei der pH-Wert durch Eintropfen von 5n-Natriumhydroxidlösung bei pH 9,25 bis 9,5 gehalten wird. Es wird 15 Minuten bei pH 8,5 bis 9,0 und 15 °C nachgerührt und dann mit 4n-Salzsäurelösung versetzt, bis der pH-Wert von 6,5 erreicht wird.

Die Lösung wird als Kupplungskomponente zur Farbstoffherstellung eingesetzt.

Zur Herstellung der Diazoniumverbindung werden 56 Teile Anilin-4-β-sulfatoäthylsulfon in 500 Teil Eiswasser suspendiert, mit 45 Teile conc. wässriger Salzsäure angesäuert und mit 40 Volumenteilen einer 5n-Natriumnitritlösung diazotiert. Man rührt 2 Stunden bei ca. 5 °C nach und zerstört dann überschüssige salpetrige Säure mittels Amidosulfonsäure. Die so hergestellte Diazoniumsalzlösung lässt man bei einem pH-Wert von 5,5 bis 6,0 langsam in die Lösung der Kupplungskomponente einlaufen. Man rührt 2 Stunden bis zur vollständigen Kupplung nach. Der pH-Wert wird durch Zugabe von Natriumbicarbonat auf 5,5 bis 6,0 gehalten. Dann wird der Farbstoff mit Natriumchlorid abgeschieden, auf der Nutsche isoliert und im Vakuum bei 40 °C getrocknet. Nach dem Mahlen wird ein rotes, elektrolythaltiges Farbstoffpulver erhalten, das das Natriumsalz der Verbindung der Formel

(Siehe Formel Seite 13 f.)

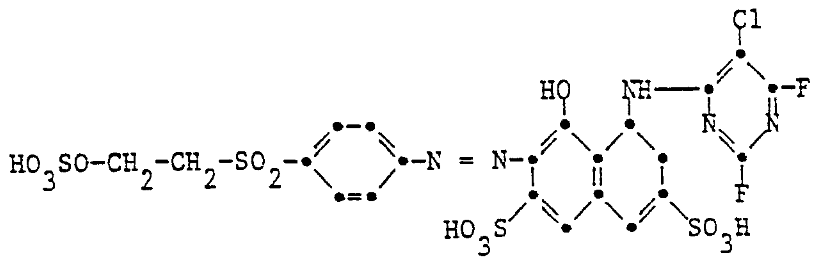

enthält.

Diese Verbindung besitzt sehr gute Farbstoffeigneschaften und färbt Cellulosematerialien nach den üblichen Färbe- und Druckverfahren für Reaktivfarbstoffe in blaustichig roten Tönen mit sehr guten Nassechtheitseigenschaften.

## Beispiel 2

64 Teile 1-Amino-8-naphthol-3,6-disulfonsäure werden in 800 Teilen Wasser unter Zusatz von 30 %iger Natriumhydroxidlösung bei pH 9,0 bis 9,5 gelöst. Man kühlt dann auf 10 °C ab und lässt 34 Teile 2,4,6-Trifluor-5-chlorpyrimidin zutropfen, wobei der pH-Wert durch Eintropfen von 5n-Natriumhydroxidlösung bei pH 9,25 bis 9,5 gehalten wird. Es wird 15 Minuten bei pH à,5 bis 9,0 und 15 °C nachgerührt und dann mit 4n-Salzsäurelösung versetzt, bis der pH-Wert von 6,5 erreicht wird.

Die Lösung wird als Kupplungskomponente zur Farbstoffherstellung eingesetzt.

Zur Herstellung der Diazoniumverbindung werden 56 Teile Anilin-3-β-sulfatoäthylsulfon in 500 Teile Eiswasser suspendiert, mit 45 Teilen conc. wässriger Salzsäure angesäuert und mit 40 Volumenteilen einer 5n-Natriumnitritlösung diazotiert. Man rührt 2 Stunden bei ca. 5 °C nach und zerstört dann überschüssige salpetrige Säure mittels Amidosulfonsäure. Die so hergestellte Diazoniumsalzlösung lässt man bei einem pH-Wert von 5,5 bis 6,0 langsam in die Lösung der Kupplungskomponente einlaufen. Man rührt 2 Stunden bis zur vollständigen Kupplung nach. Der pH-Wert wird durch Zugabe von Natriumbicarbonat auf 5,5 bis 6,0 gehalten. Dann wird der farbstoff mit Natriumchlorid abgeschieden, auf der Nutsche isoliert und im Vakuum bei 40 °C getrocknet. Nach dem Mahlen wird ein rotes, elektrolythaltiges Farbstoffpulver erhalten, das das Natriumsalz der Verbindung der Formel

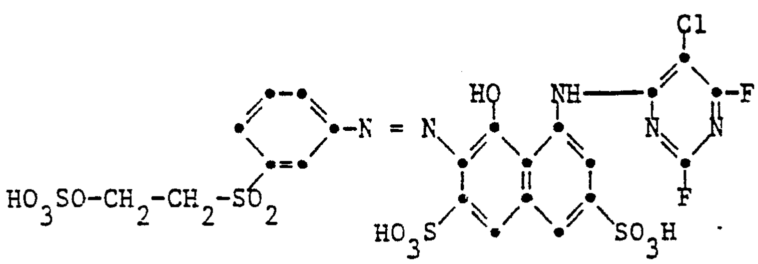

enthält.

Diese Verbindung besitzt sehr gute Farbstoffeigenschaften und färbt Cellulosematerial nach den üblichen Färbe- und Druckverfahren für Reaktivfarbstoffe in blaustichig roten Tönen mit sehr guten Nassechtheitseigenschaften.

## Beispiel 3

64 Teile 1-Amino-8-naphthol-4,6-disulfonsäure werden in 800 Teilen Wasser unter Zusatz von 30 %iger Natriumhydroxidlösung bei pH 9,0 bis 9,5 gelöst. Man kühlt dann auf 10 °C ab und lässt 34 Teile 2,4,6-Trifluor-5-chlorpyrimidin zutropfen, wobei der pH-Wert durch Eintropfen von 5n-Natriumhydroxidlösung bei pH 9,25 bis 9,5 gehalten wird. Es wird 15 Minuten bei pH 8,5 bis 9,0 und 15 °C nachgerührt und dann mit 4n-Salzsäurelösung versetzt, bis der pH-Wert von 6,5 erreicht wird.

Die Lösung wird als Kupplungskomponente zur Farbstoffherstellung eingesetzt.

Zur Herstellung der Diazoniumverbindung werden 56 Teile Anilin-4-β-sulfatoäthylsulfon in 500 Teilen Eiswasser suspendiert, mit 45 Teilen conc. wässriger Salzsäure angesäuert und mit 40 Volumenteilen einer 5n-Natriumnitritlösung diazotiert. Man rührt 2 Stunden bei ca. 5 °C nach und zerstört dann überschüssige salpetrige Säure mittels Amidosulfonsäure. Die so hergestellte Diazoniumsalzlösung lässt man bei einem pH-Wert von 5,5 bis 6,0 langsam in die Lösung der Kupplungskomponente einlaufen. Man rührt 2 Stunden bis zur vollständigen Kupplung nach. Der pH-Wert wird durch Zugabe von Natriumbicarbonat auf 5,5 bis 6,0 gehalten. Dann wird der Farbstoff mit Natriumchlorid abgeschieden, auf der Nutsche isoliert und im Vakuum bei 40 °C getrocknet. Nach dem Mahlen wird ein rotes, elektrolythaltiges Farbstoffpulver erhalten, das das Natriumsalz der Verbindung der Formel

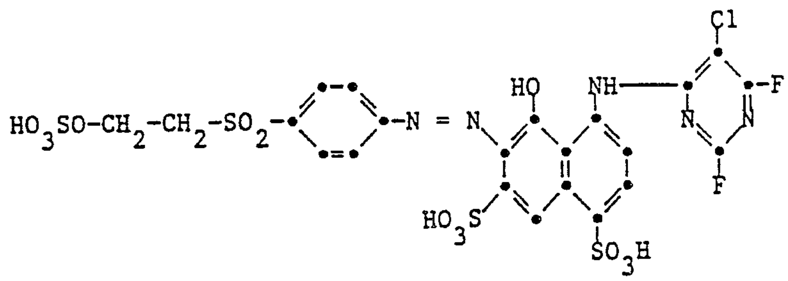

enthält.

Diese Verbindung besitzt sehr gute Farbstoffeigenschaften unf färbt Cellulosematerialien nach den üblichen Färbe- und Druckverfahren für Reaktivfarbstoffe in neutralen roten Tönen mit sehr guten Nassechtheitseigenschaften.

## Beispiel 4

48 Teile 2-Amino-5-naphthol-7-sulfonsäure werden in 800 Teilen Wasser unter Zusatz von 30 %iger Natriumhydroxidlösung bei pH 6,0 bis 6,5 gelöst. Man kühlt dann auf 10 °C ab und lässt 34 Teile 2,4,6-Trifluor-5-chlorpyrimidin zutropfen, wobei der pH-Wert durch Eintropfen von 5n-Natriumhydroxidlösung bei pH 6,0 bis 6,5 gehalten wird. Es wird 20 Minuten bei pH 6,0 bis 6,5 und 15 °C nachgerührt.

Die Lösung wird als Kupplungskomponente zur Farbstoffherstellung eingesetzt.

Zur Herstellung der Diazoniumverbindung werden 56 Teile Anilin-4-β-sulfatoäthylsulfon in 500 Teilen Eiswasser suspendiert, mit 45 Teilen conc. wässriger Salzsäure angesäuert und mit 40 Volumenteilen einer 5n-Natriumnitritlösung diazotiert. Man rührt 2 Stunden bei ca. 5 °C nach und zerstört dann überschüssige salpetrige Säure mittels Amidosulfonsäure. Die so hergestellte Diazoniumsalzlösung lässt man bei einem pH-Wert von 5,5 bis 6,0 langsam in die Lösung der Kupplungskomponente einlaufen. Man rührt 2 Stunden bis zur vollständigen Kupplung nach. Der pH-Wert wird durch Zugabe von Natriumbicarbonat auf 5,5 bis 6,0 gehalten. Dann wird der Farbstoff mit Natriumchlorid abgeschieden, auf der Nutsche isoliert und im Vakuum bei 40 °C getrocknet. Nach dem mahlen wird ein rotes, elektrolythaltiges Farbstoffpulver erhalten, das das Natriumsalz der Verbindung der Formel

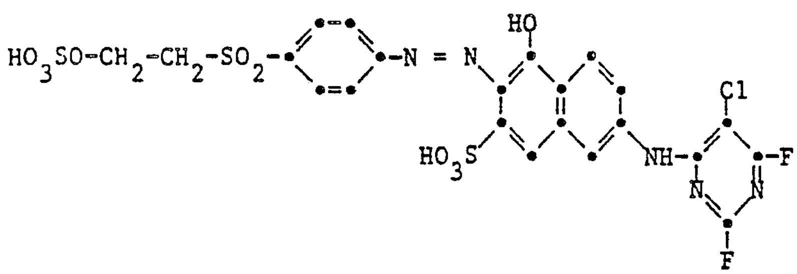

enthält.

Diese Verbindung besitzt sehr gute Farbstoffeigenschaften und färbt Cellulosematerialien nach den üblichen Färbe- und Druckverfahren für reaktivfarbstoffe in orangen Tönen mit sehr guten Nassechtheitseigenschaften.

## Beispiel 5

281 Teile 4-β-Sulfatoäthylsulfonyl-anilin werden in 1 000 Teilen Wasser eingetragen und durch vorsichtige Zugabe von 65 Teilen Natriumcarbonat in Lösung gebracht, wobei sich der pH-Wert auf 6,5 bis 7,0 einstellt. Man lässt 2 Stunden bei diesem pH weiterrühren, gibt sodann 750 Teile Eis und 255 Teile einer 31 %igen wässrigen Salzsäure hinzu ; anschliessend lässt man 173 Teile der 40 %igen wässrigen Natriumnitritlösung einlaufen, rührt bei 0 bis 5 °C weitere 2 Stunden nach und zerstört sodann überschüssige salpetrige Säure mittels Amidosulfonsäure. In die so hergestellte Diazoniumsalzsuspension lässt man bei einem pH-Wert von 6,0 bis 6,5 unter gleichzeitigem Eintragen von etwa 70 Teilen Natriumcarbonat die Lösung des Kondensationsproduktes von je einem Mol Cyanurchlorid und 1-Amino-8-naphthol-3,6-disulfonsäure und 3-Amino-acetanilid-4-sulfonsäure und 2,4,6-Trifluor-5-chlorpyrimidin einlaufen. Diese Lösung des Kondensationsproduktes wird wie folgt hergestellt : 319 Teile 1-Amino-8-naphthol-3,6-disulfonsäure werden unter Rühren in ein Gemisch aus 500 Teilen Wasser und 121 Teilen einer 33 %igen Natronlauge eingetragen ; der pH-Wert der Lösung soll anschliessend 6,5 bis 7,0 betragen. Diese Lösung lässt man innerhalb von einer Stunde in eine Suspension von 194 Teilen Cyanurchlorid, 800 Teilen Wasser und 800 Teilen Eis bei einem pH-Wert von 3,0 bis 3,8 einlaufen. Es wird noch eine Stunde lang bei 0 bis 5 °C und bei dem angegebenen pH-Wert, der durch Einstreuen von 92 Teilen Natriumbicarbonatgehalten wird, weitergerührt. In die so erhaltene klare Lösung trägt man 221 Teile 3-Amino-acetanilid-4-sulfonsäure ein und danach innerhalb einer Stunde 105 Teile Natriumcarbonat, wobei sich der pH-Wert auf 4,5 bis 5,0 erhöht. Bei diesem pH-Wert lässt man noch 2 Stunden nachrühren,

wobei die Temperatur bei 35 bis 40 °C gehalten wird. Die Lösung wird mit 400 Teilen conc. Natriumhydroxyd versetzt und 2 Stunden bei 70 bis 75 °C gerührt. Danach mit conc. Salzsäure neutralisiert. Zu dieser neutralen Lösung werden innert 1 Stunde 169 Teile 2,4,6-Trifluor-5-chlorpyrimidin bei 10 bis 15 °C zugetropft.

Nachdem die Diazoniumsuspension und die Lösung der Kupplungskomponente vereinigt sind, wird das Kupplungsgemisch noch 2 Stunden lang bei Raumtemperatur nachgerührt, wobei durch portionenweises Einstreuen von 70 Teilen Natriumcarbonat ein pH-Wert von 6,0 bis 6,5 gehalten wird. Nach beendeter Kupplung wird auf 50 °C erwärmt, 40 Teile Kieselgur werden zugegeben, die Lösung geklärt (filtriert) und das Filtrat sprühgetrocknet.

Es wird ein rotes, elektrolythaltiges und gegebenenfalls die erwähnte Puffersubstanz enthaltendes Pulver enthalten, das das Alkalimetallsalz, insbesondere Natriumsalz, der Verbindung der Formel

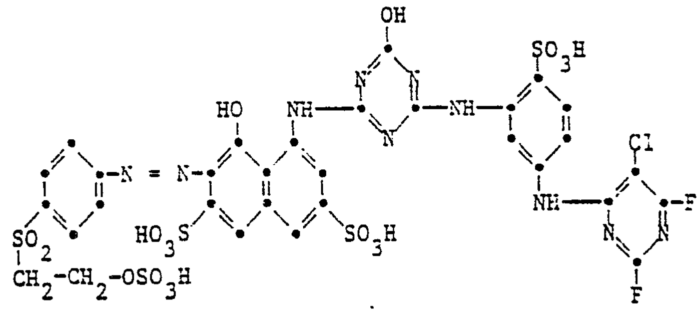

enthält. Diese Verbindung besitzt sehr gute Farbstoffeigenschaften ; sie färbt die in der Beschreibung genannten Materialien, insbesondere Wolle aus saurem bad oder Cellulosefasermaterialien in Gegenwart von säurebindenden Mitteln nach den in der Technik üblichen Applikations- und Fixiermethoden für faserreaktive Farbstoffe, in klaren roten Tönen mit sehr gutem Farbaufbau und hohem Fixiergrad. Die Färbungen besitzen sehr gute Nassechtheiten, wie beispielsweise eine ausgezeichnete Waschechtheit, sowie eine hohe Dampfbeständigkeit und sehr gute Reibechtheit, ebenso sehr echte Eigenschaften bezüglich eines Ausblutens oder Abfleckens auf beiliegendem Gewebe.

## Beispiel 6

64 Teile 1-Amino-8-naphthol-3,6-disulfonsäure werden in 800 Teilen Wasser unter Zusatz von 15 Teilen Natriumcarbonat bei pH 4,5 bis 5,0 gelöst. Man kühlt dann auf 0 °C ab und lässt 28 Teile Cyanurfluorid zutropfen, wobei der pH-Wert fällt und durch Einstreuen von Natriumbicarbonatpulver auf pH 3 bis 4 gehalten wird. Es wird 15 Minuten bei pH 3 bis 4 und 0 °C nachgerührt und dann eine Lösung des Natriumsalzes von 68 Teilen 2,4-Difluor-5-chlor-6-(3'-amino-4'-sulfophenylamino)-pyrimidin zugegeben. Bei einem pH-Wert von 5 wird 5 Stunden bei 20 bis 25 °C gerührt, bis keine freies Amin mehr durch Diazotierprobe nachweisbar ist. Die Lösung wird als Kupplungskomponente zur Farbstoffherstellung eingesetzt.

Zur Herstellung der Diazoniumverbindung werden 56 Teile Anilin-4-β-sulfatoäthylsulfon in 500 Teilen Eiswasser suspendiert, mit 45 Teilen conc. wässriger Salzsäure angesäuert und mit 40 Volumenteilen einer 5n-Natriumnitritlösung diazotiert. Man rührt 2 Stunden bei ca. 5 °C nach und zerstört dann überschüssige salpetrige Säure mittels Amidosulfonsäure. Die so hergestellte Diazoniusalzlösung lässt man bei einem pH-Wert von 5,5 bis 6,0 langsam in die Lösung der Kupplungskomponente einlaufen. Man rührt 2 Stunden bis zur vollständigen Kupplung nach. Der pH-Wert wird durch Zugabe von Natriumbicarbonat auf 5,5 bis 6,0 gehalten. Dann wird der Farbstoff mit Natriumchlorid abgeschieden, auf der Nutsche isoliert und im Vakuum bei 40 °C getrocknet. Nach dem Mahlen wird ein rotes, elektrolythaltiges Farbstoffpulver erhalten, das das Natriumsalz der Verbindung der Formel

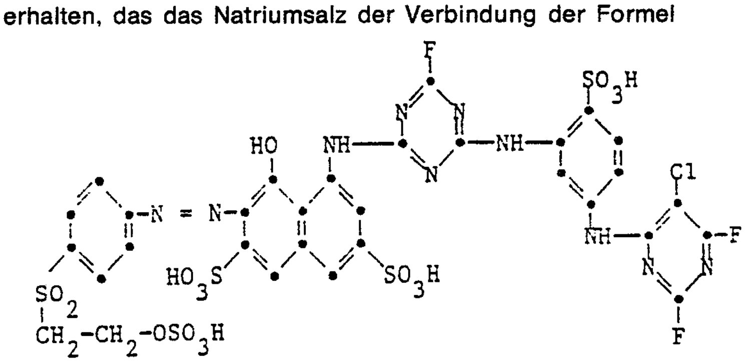

enthält. Diese Verbindung besitzt sehr gute Farbstoffeigenschaften und färbt Baumwolle und Wolle nach den üblichen Färbe- und Druckmethoden für Reaktivfarbstoffe in roten Tönen mit sehr guten Nassechtheitseigenschaften.

Analog zu den beschriebenen Methoden lassen sich auch die in der folgenden Tabelle aufgeführten Farbstoffe herstellen, die Baumwolle im angegebenen Farbton färben.

Tabelle

| Nr. | Beispiel | Farbton auf Baumwolle |
|---|---|---|
| 8 | 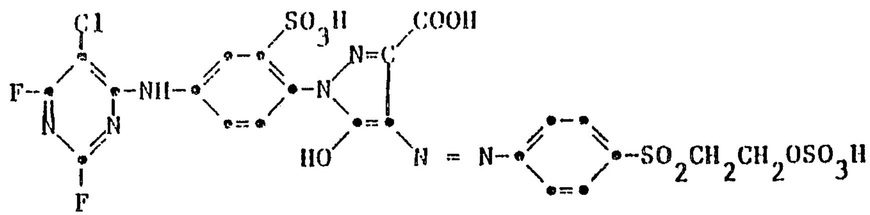 | grünstichig gelb |
| 9 | 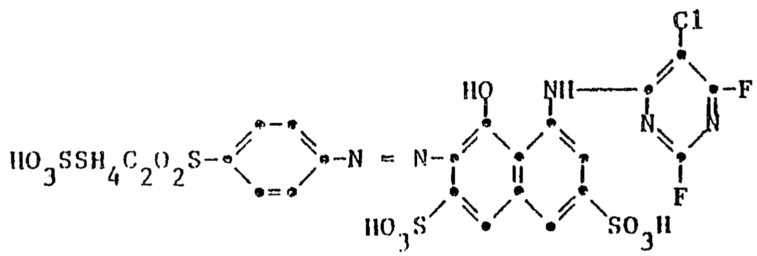 | blaustichig rot |
| 10 | 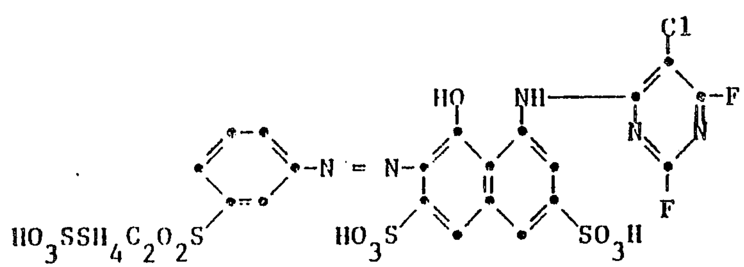 | blaustichig rot |

(Fortsetzung)

| Nr. | Beispiel | Farbton auf Baumwolle |
|---|---|---|
| 11 | 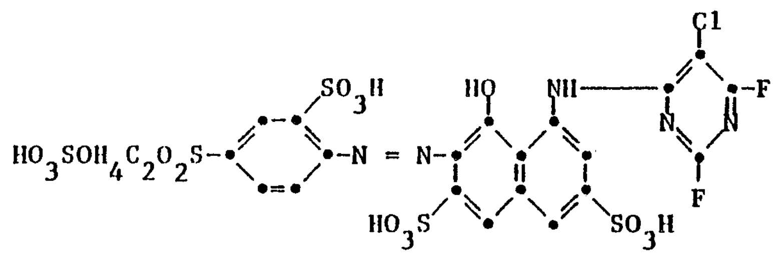 | blaustichig rot |
| 12 | 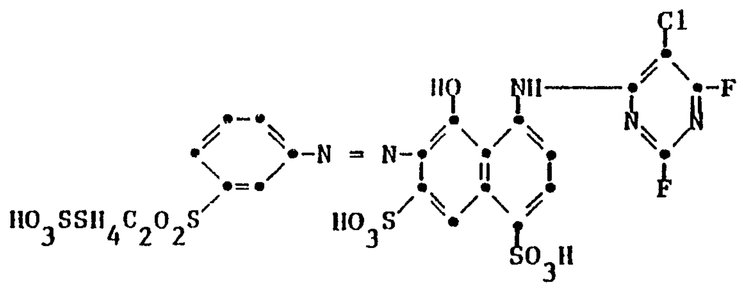 | rot |
| 13 | 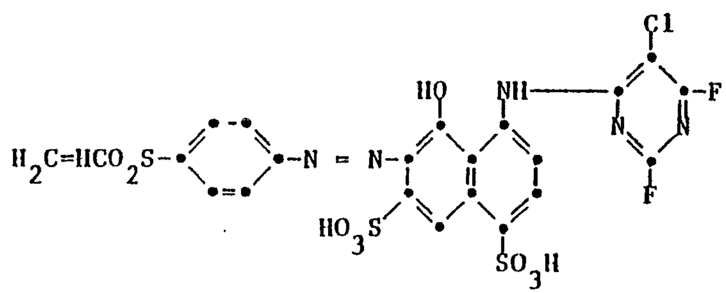 | blaustichig rot |

(Fortsetzung)

| Nr. | Beispiel | Farbton auf Baumwolle |
|---|---|---|
| 14 | 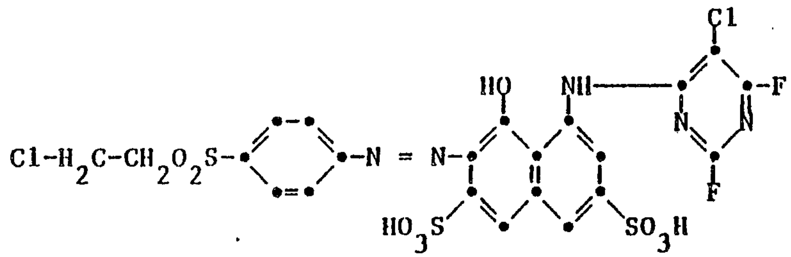 | blaustichig rot |
| 15 | 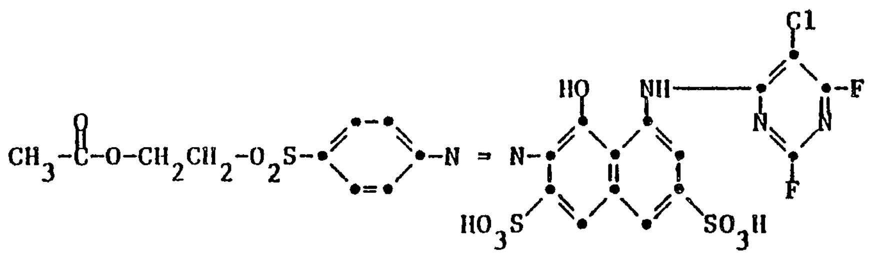 | blaustichig rot |
| 16 | 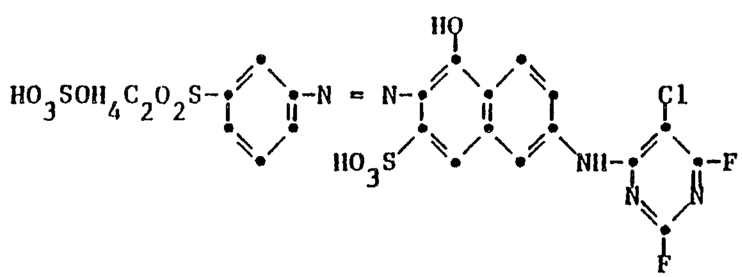 | goldgelb |

(Fortsetzung)

| Nr. | Beispiel | Farbton auf Baumwolle |
|---|---|---|
| 17 | 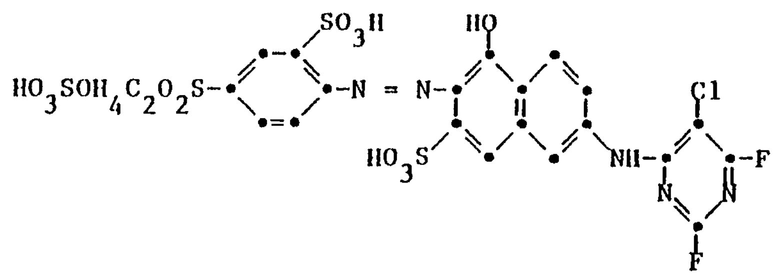 | orange |
| 18 | 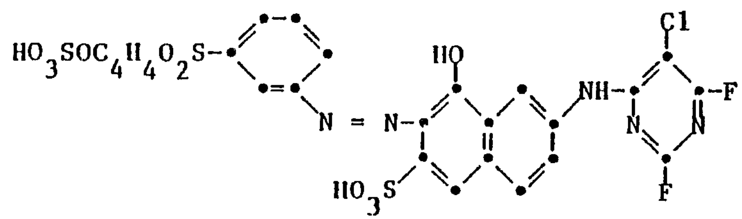 | orange |
| 19 | 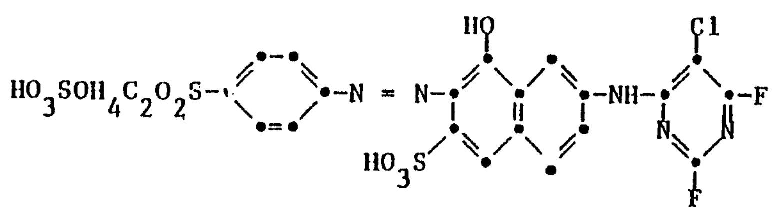 | scharlach |

(Fortsetzung)

| Nr. | Beispiel | Farbton auf Baumwolle |
|---|---|---|
| 20 | 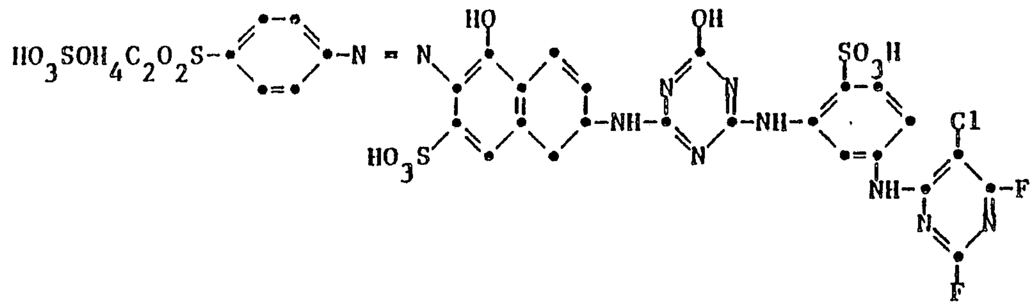 | orange |
| 21 | 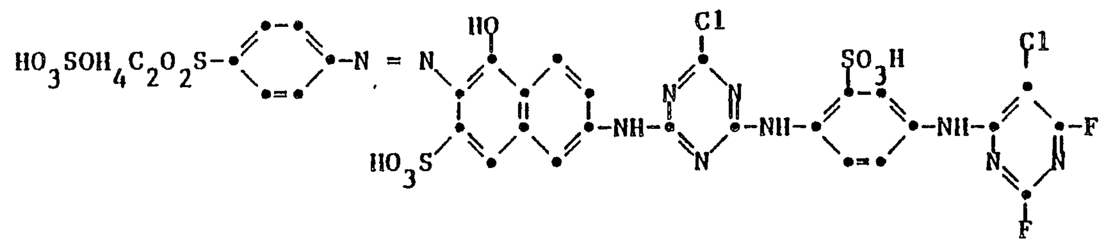 | orange |
| 22 | 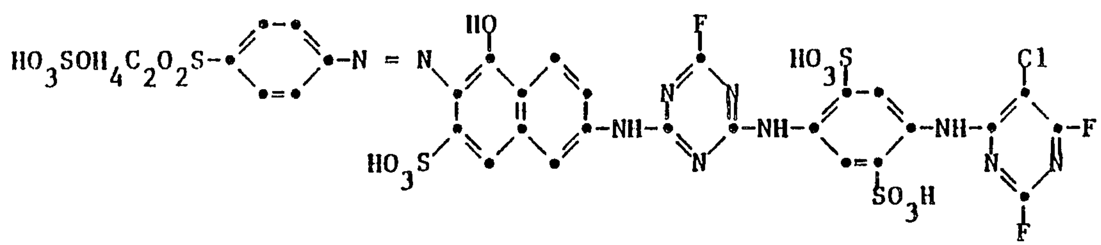 | orange |

(Fortsetzung)

| Nr. | Beispiel | Farbton auf Baumwolle |
| --- | --- | --- |
| 23 | 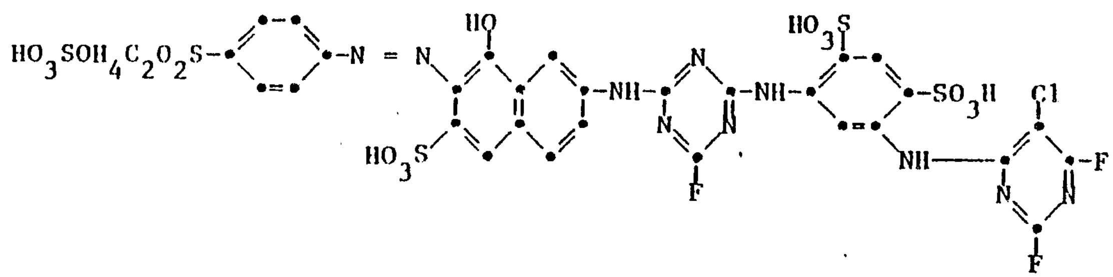 | scharlach |
| 24 | 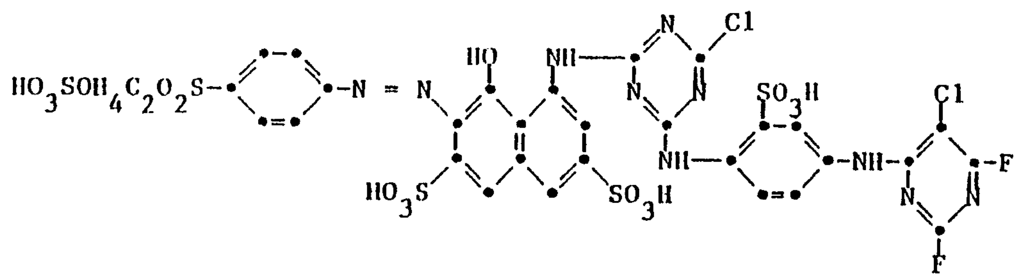 | gelbstichig rot |
| 25 | 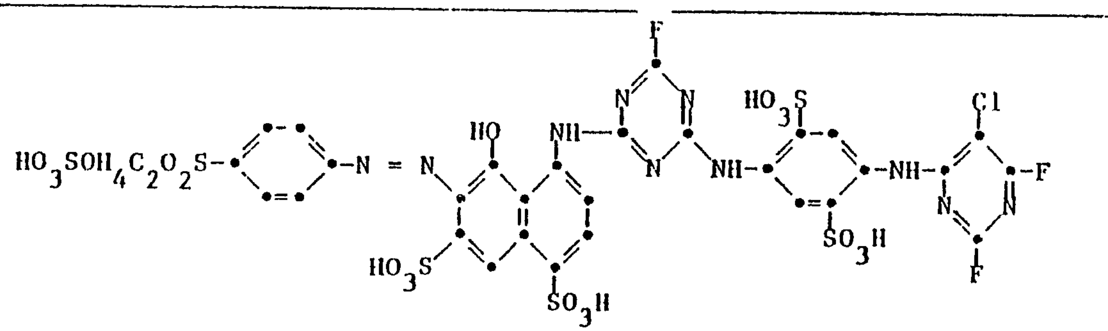 | gelbstichig rot |

(Fortsetzung)

| No. | Beispiel | Farbton auf Baumwolle |
|---|---|---|
| 26 | 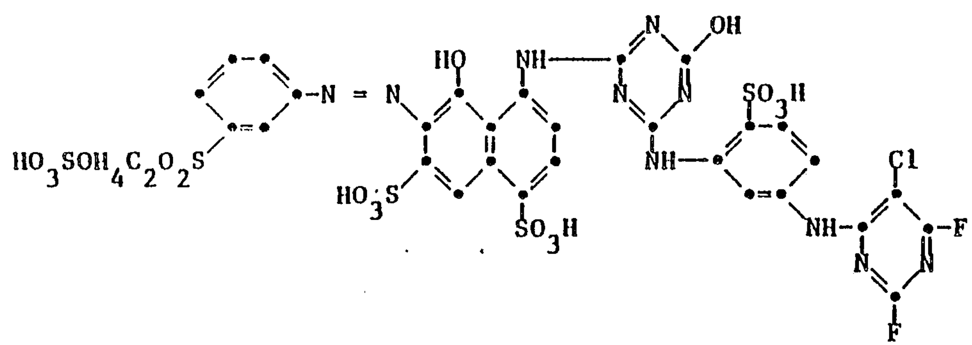 | gelbstichig rot |
| 27 | 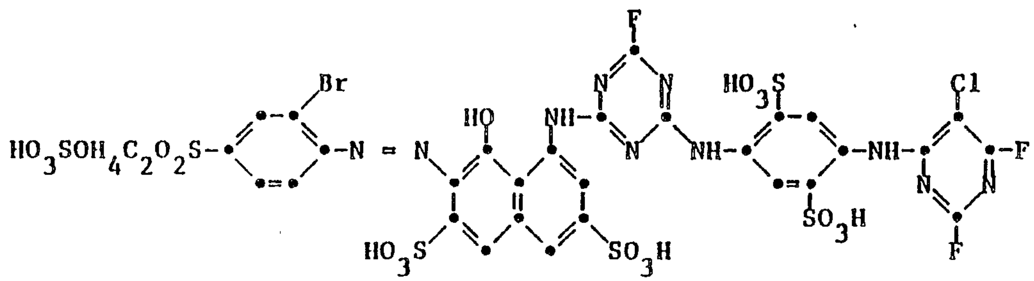 | gelbstichig rot |
| 28 | 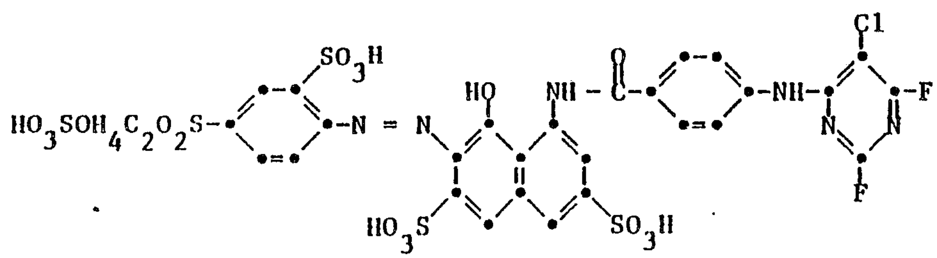 | rot |

(Fortsetzung)

| Nr. | Beispiel | Farbton auf Baumwolle |
|---|---|---|
| 29 | 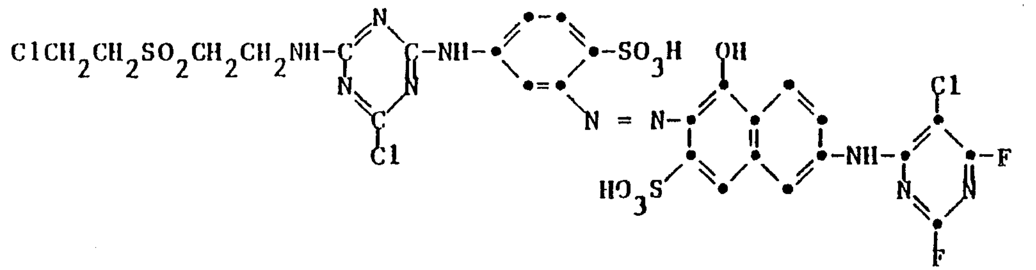 | orange |
| 30 | 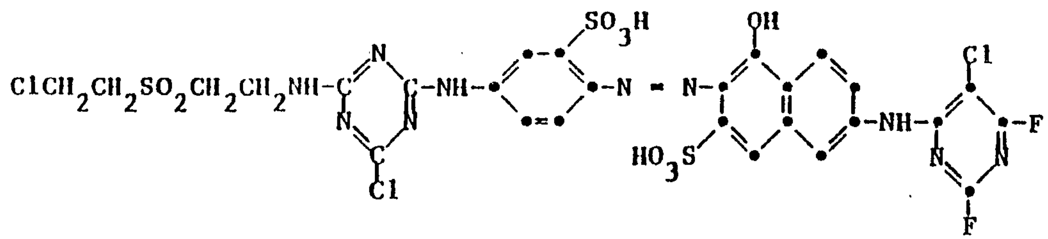 | scharlach |
| 31 | 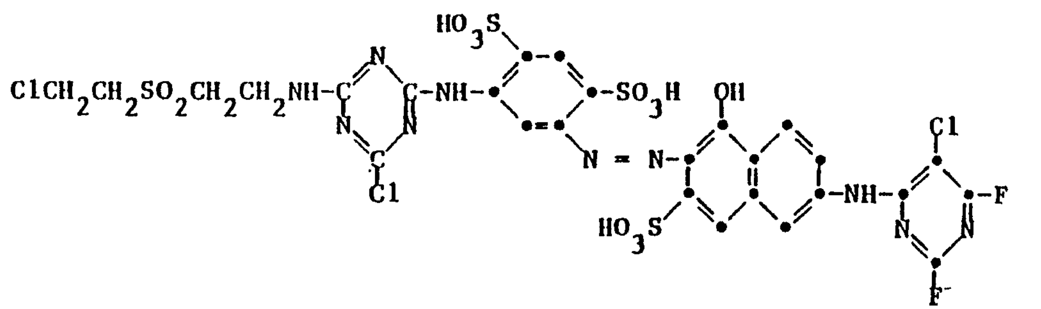 | orange |

(Fortsetzung)

| Nr. | Beispiel | Farbton auf Baumwolle |
|---|---|---|
| 32 | 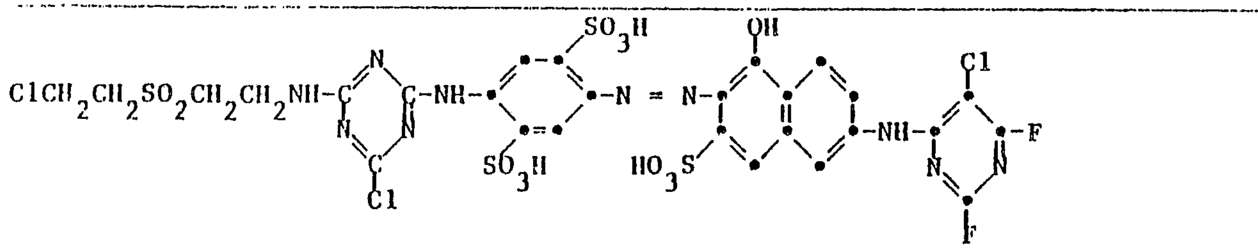 | scharlach |
| 33 | 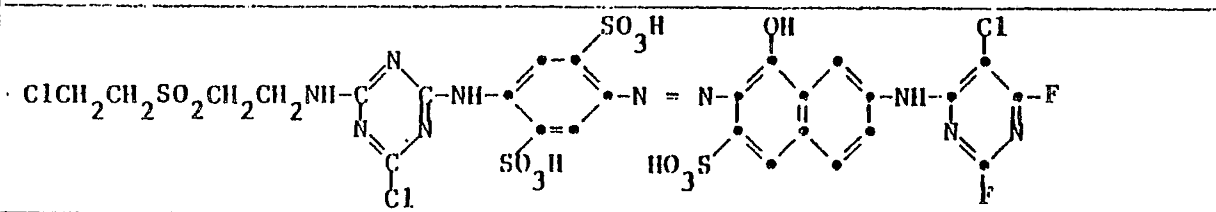 | rot |
| 34 | 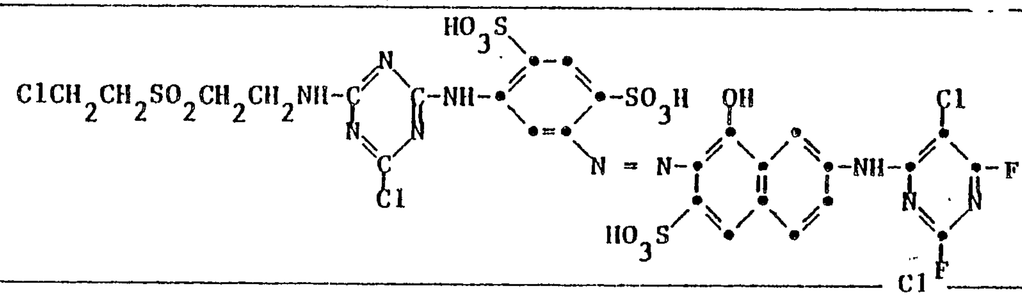 | scharlach |
| 35 | 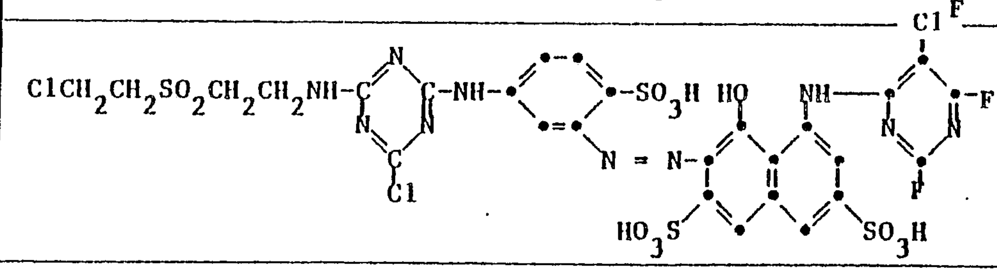 | blaustichig rot |

(Fortsetzung)

| Nr. | Beispiel | Farbton auf Baumwolle |
|---|---|---|
| 36 | 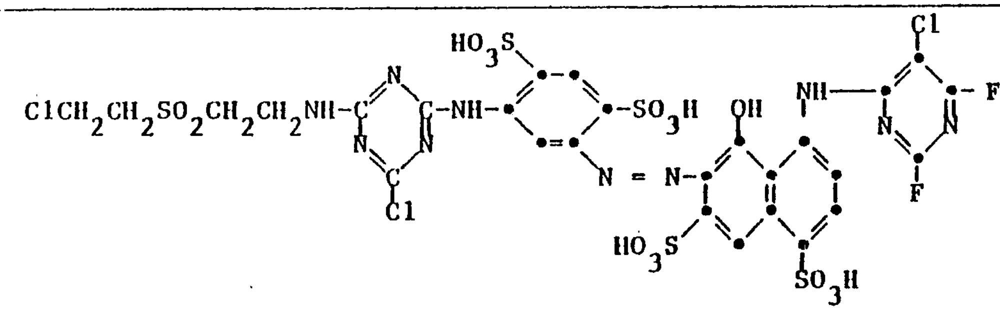 | rot |
| 37 | 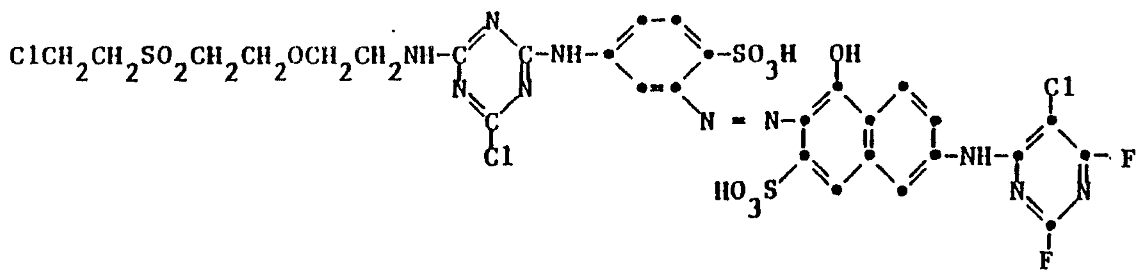 | orange |
| 38 | 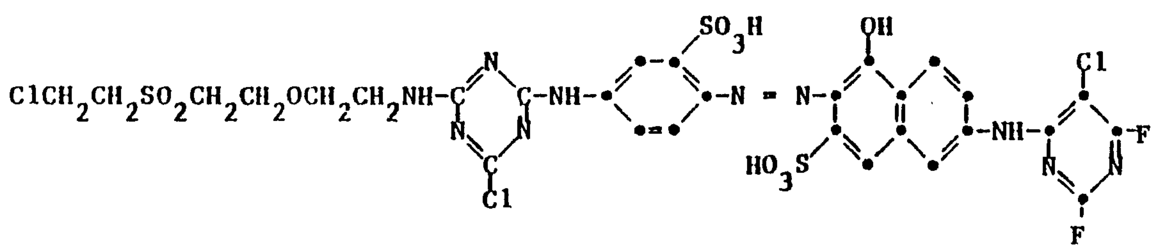 | scharlach |

(Fortsetzung)

| Nr. | Beispiel | Farbton auf Baumwolle |
|---|---|---|
| 39 | 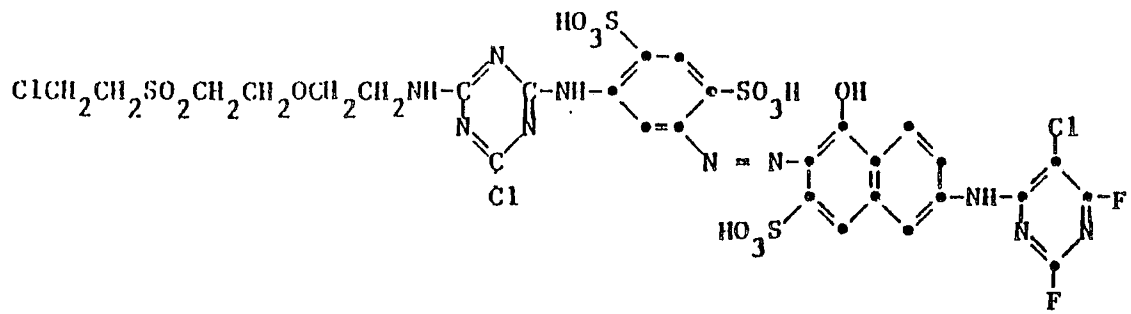 | orange |
| 40 | 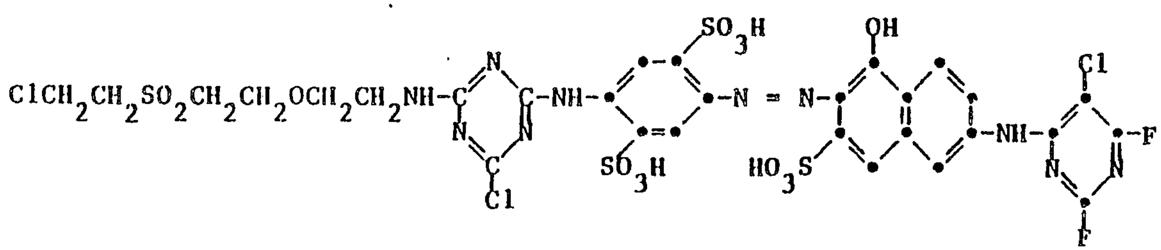 | scharlach |
| 41 | 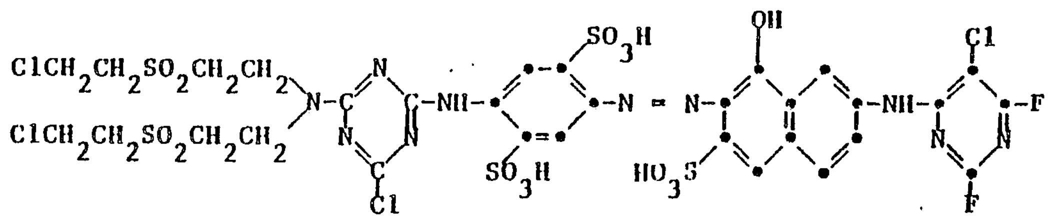 | rot |

(Fortsetzung)

| Nr. | Beispiel | Farbton auf Baumwolle |
|---|---|---|
| 42 | 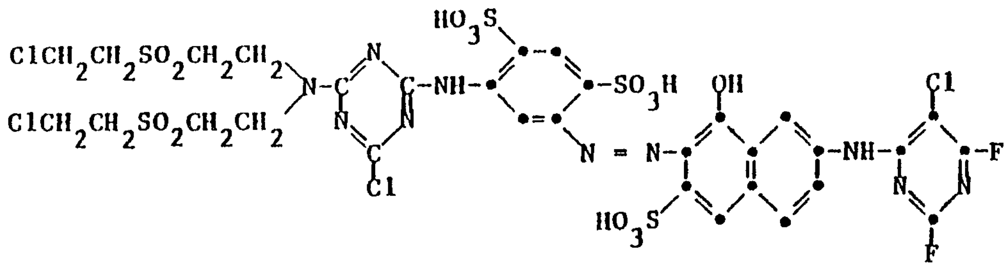 | scharlach |
| 43 | 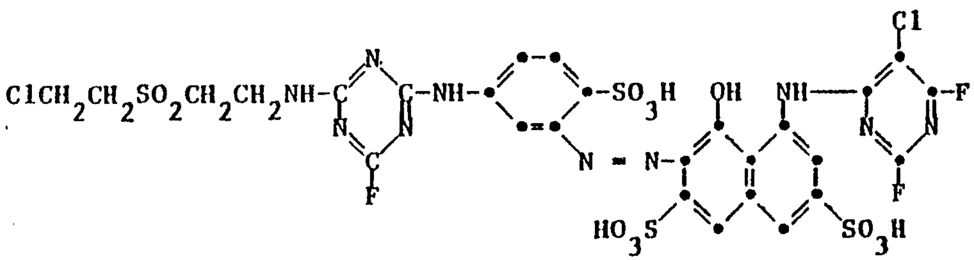 | blaustichig rot |
| 44 | 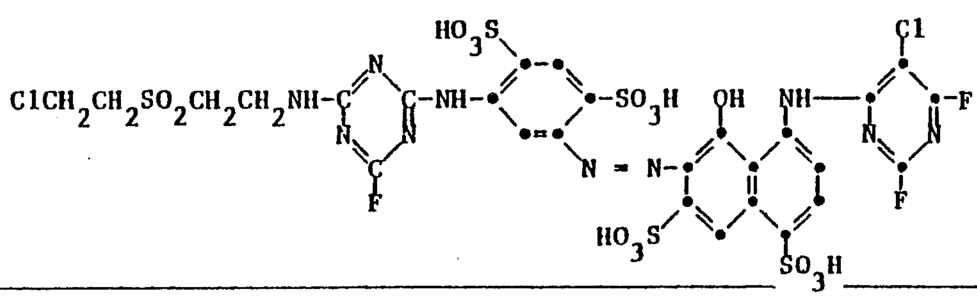 | rot |

Färbevorschrift I

2 Teile des gemäss Beispiel 1 erhaltenen Farbstoffes werden in 400 Teilen Wasser gelöst ; dazu gibt man 1 500 Teile einer Lösung, die pro Liter 53 g Natriumchlorid enthält. In dieses Färbebad geht man bei 40 °C mit 100 Teilen eines Baumwollgewebes ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40 °C gehalten. Danach wird die gefärbte Ware gespült, während einer Viertelstunde mit einem nichtionogenen Waschmittel kochend geseift, nochmals gespült und getrocknet.

Färbevorschrift II

2 Teile des gemäss Beispiel 1 erhaltenen Reaktivfarbstoffes werden in 400 Teilen Wasser gelöst ; dazu gibt man 1 500 Teile einer Lösung, die pro Liter 53 g Natriumchlorid enthält. In dieses Färbebad geht man bei 35 °C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35 °C gehalten. Danach wird die Temperatur innerhalb von 20 Minuten auf 60 °C erhöht. Die Temperatur wird weitere 35 Minuten bei 60 °C gehalten. Danach wird gespült, während einer Viertelstunde mit einem nichtionogenen Waschmittel kochend geseift, nochmals gespült und getrocknet.

Färbevorschrift III

8 Teile des gemäss Beispiel 1 erhaltenen Reaktivfarbstoffes werden in 400 Teilen Wasser gelöst ; dazu gibt man 1 400 Teile einer Lösung, die pro Liter 100 g Natriumsulfat enthält. In dieses Färbebad geht man bei 25 °C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60 °C erhöht. Die Temperatur wird weitere 90 Minuten auf 60 °C gehalten. Danach wird gespült, während einer Viertelstunde mit einem nichtionogenen Waschmittel kochend geseift, nochmals gespült und getrocknet.

Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI

2 Teile des gemäss Beispiel 1 erhaltenen Reaktivfarbsotffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt, und dann getrocknet. Dann imprägniert man das Gewebe mit einer 20 °C Warmen Lösung, die pro Liter 4 g Natriumhydroxyd und 300 g Natriumchlorid enthält, quetscht auf 75 % Gewichtszunahme ab, dämpft die Färbung während 30 Sekunden bei 100 bis 102 °C, spült, seift während einer Viertelstunde in einer 0,3 %igen kochenden Lösung eines nichtionogenen Waschmittels, spült und trocknet.

Druckvorschrift I

3 Teile des gemäss Beispiel 1 erhaltenen Reaktivfarbstoffes werden unter schnellem Rühren in 100 Teile einer Stammverdickung, enthaltend 50 Teile 5 %ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe,

trocknet und dämpft den erhaltenen bedruckten Stoff 2 Minuten bei 102 °C in gesättigtem Dampf. Das bedruckte Gewebe wird dann gespült, gegebenenfalls kochend geseift und nochmals gespült, und anschliessend getrocknet.

Druckvorschrift II

5 Teile des gemäss Beispiel 1 erhaltenen Reaktivfarbstoffes werden unter schnellem Rühren in 100 Teile einer Stammverdickung, enthaltend 50 Teile 5 %ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102 °C in gesättigtem Dampf. Das bedruckte Gewebe wird dann gespült, gegebenenfalls kochend geseift und nochmals gespült, und anschliessend getrocknet.

**Patentansprüche**

1. Reaktivfarbstoffe der Formel

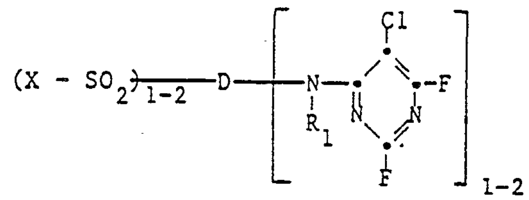

(1)

worin D der Rest eines Farbstoffes der Monoazo-, Metallkomplexazo-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Reihe, $R_1$ Wasserstoff oder ein gegebenenfalls substituierter $C_{1-4}$-Alkylrest, und X die Vinyl-, β-Sulfatoäthyl-, β-Thiosulfatoäthyl-, β-Chloräthyl- oder β-Acetoxyäthyl-Gruppe ist.

2. Reaktivfarbstoffe gemäss Anspruch 1, worin D der Rest eines Monoazofarbstoffes oder eines Metallkomplexazofarbstoffes ist.

3. Reaktivfarbstoffe gemäss Anspruch 2, der Formel

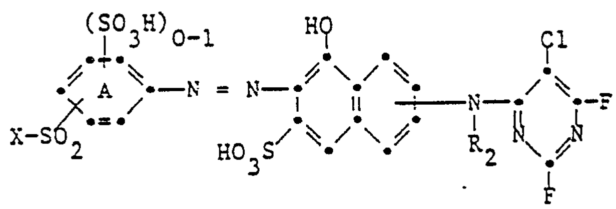

(2)

worin $R_2$ Wasserstoff, Methyl oder Aethyl ist, X die für Anspruch 1 geltende Bedeutung hat, und der Benzolring A gegebenenfalls weitersubstituiert ist.

4. Reaktivfarbstoffe gemäss Anspruch 2, der Formel

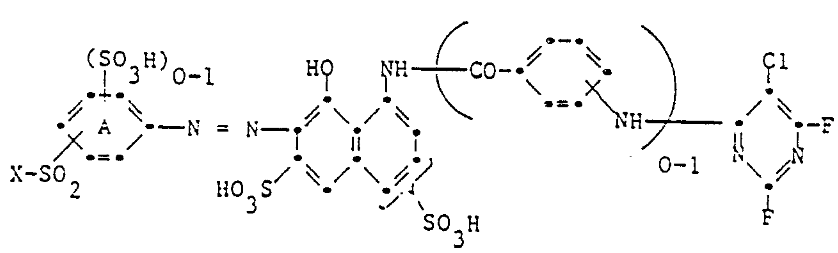

(3)

worin X die für Anspruch 1 geltende Bedeutung hat, und der Benzolring A gegebenenfalls weitersubstituiert ist.

5. Reaktivfarbstoffe gemäss Anspruch 2, der Formel

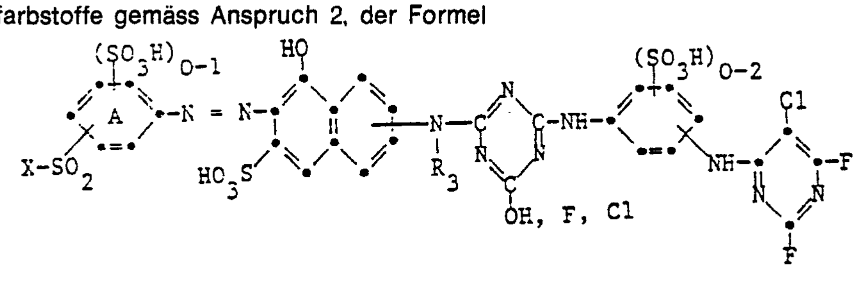

(4)

worin $R_3$ Wasserstoff, Methyl oder Aethyl ist, X die für Anspruch 1 geltende Bedeutung hat, und der Benzolring A gegebenenfalls weitersubstituiert ist.

6. Reaktivfarbstoffe gemäss Anspruch 2, der Formel

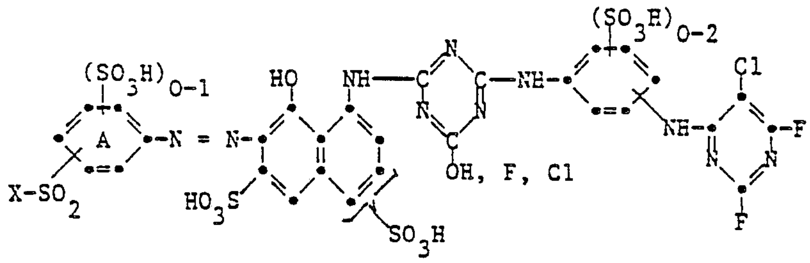

(5)

worin X die für Anspruch 1 geltende Bedeutung hat, und der Benzolring A gegebenenfalls weitersubstituiert ist.

7. Reaktivfarbstoffe gemäss Anspruch 4, worin der Benzolring A nicht weitersubstituiert ist.

8. Reaktivfarbstoffe gemäss Anspruch 1, worin X die Vinyl- oder β-Sulfatoäthyl-Gruppe ist.

9. Verfahren zur Herstellung von Reaktivfarbstoffen gemäss Anspruch 1, dadurch gekennzeichnet, dass man Farbstoffe der Formel

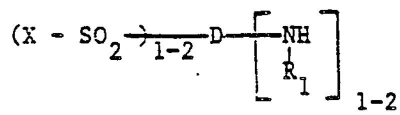

(6)

worin D, $R_1$ und X die in Anspruch 1 angegebenen Bedeutungen haben, oder ihre Vorprodukte mit 2,4,6-Trifluor-5-chlorpyrimidin zu Reaktivfarbstoffen der Formel (1) umsetzt, oder die erhaltenen Zwischenprodukte in die gewünschten Endfarbstoffe überführt, und gegebenenfalls eine weitere Umwandlungsreaktion anschliesst.

10. Verwendung der Reaktivfarbstoffe gemäss Anspruch 1, zum Färben oder Bedrucken von cellulosehaltigen Fasermaterialien.

11. Verwendung gemäss Anspruch 10, zum Färben oder Bedrucken von Baumwolle.

**Claims**

1. A reactive dye of the formula

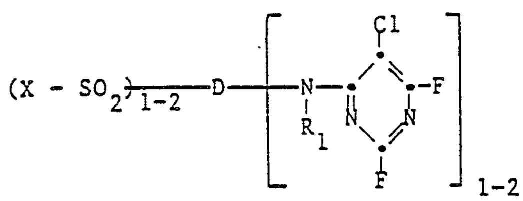

(1)

in which D is the radical of a dye of the monoazo, metal complex azo, phthalocyanine, formazan, azomethine, dioxazine, phenazine, stilbene, triphenylmethane, xanthene, thioxanthone, nitroaryl, naphthoquinone, pyrenequinone or perylenetetracarbimide series, $R_1$ is hydrogen or an unsubstituted or substituted $C_{1-4}$-alkyl radical, and X is a vinyl-, β-sulfatoethyl, β-thiosulfatoethyl, β-chloroethyl or β-acetoxyethyl group.

2. A reactive dye according to claim 1, in which D is the radical of a monoazo dye or of a metal complex azo dye.

3. A reactive dye according to claim 2 of the formula

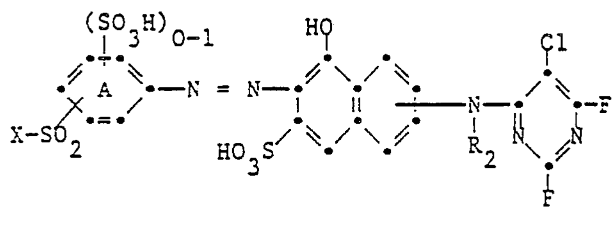

(2)

in which $R_2$ is hydrogen, methyl or ethyl, X is as defined for claim 1, and the benzene ring A may be further substituted.

4. A reactive dye according to claim 2 of the formula

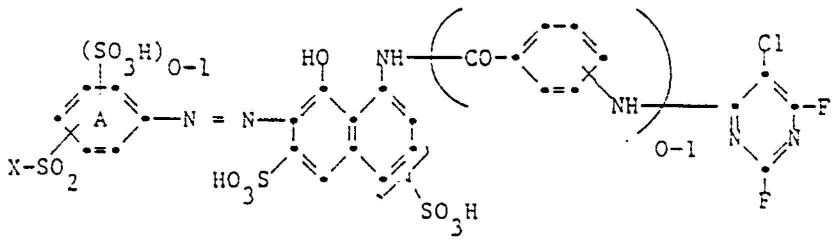

(3)

in which X is as defined for claim 1, and the benzene ring A may be further substituted.

5. A reactive dye according to claim 2 of the formula

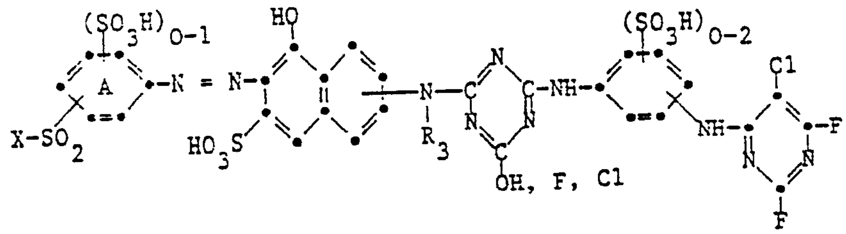

(4)

in which $R_3$ is hydrogen, methyl or ethyl, X is as defined for claim 1, and the benzene ring A may be further substituted.

6. A reactive dye according to claim 2 of the formula

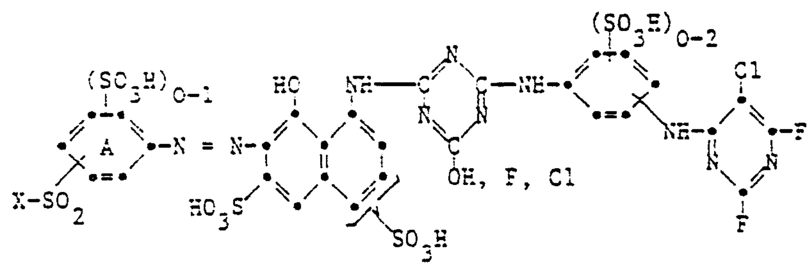

(5)

in which X is as defined for claim 1, and the benzene ring A may be further substituted.

7. A reactive dye according to claim 4 in which the benzene ring A is not further substituted.

8. A reactive dye according to claim 1 in which X is the vinyl or β-sulfatoethyl group.

9. A process for preparing a reactive dye according to claim 1, which comprises reacting a dye of the formula

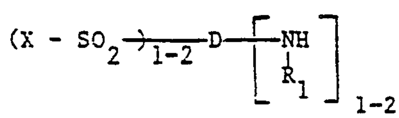

(6)

in which D, $R_1$ and X are as defined in claim 1, or a precursor, thereof, with 2,4,6-trifluoro-5-chloropyrimidine to give a reactive dye of the formula (1), or converting the resultant intermediate into the desired final dye, and, if desired, subsequently carrying out a further conversion reaction.

10. Use of a reactive dye according to claim 1, for dyeing or printing cellulose-containing fibre materials.

11. Use according to claim 10 for dyeing or printing cotton.

## Revendications

1. Colorants réactifs de formule

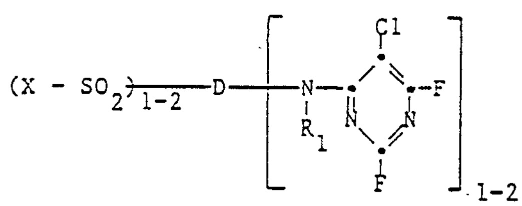

(1)

dans laquelle D est le reste d'un colorant de la série monoazoïque, azoïque à complexe métallifère, phtalocyanine, formazan, azométhine, dioxazine, phénazine, stilbène, triphénylméthane, xanthène, thioxanthone, nitroaryle, naphtoquinone, pyrènequinone ou pérylènetétracarbimide ; $R_1$ est un atome d'hydrogène ou un reste alkyle en $C_{1-4}$ éventuellement substitué ; et X est le groupe vinyle, β-sulfatoéthyle, β-thiosulfatoéthyle, β-chloréthyle ou β-acétoxyéthyle.

2. Colorants réactifs selon la revendication 1, dans lesquels D est le reste d'un colorant monoazoïque ou d'un colorant azoïque à complexe métallifère.

3. Colorants réactifs selon la revendication 2, de formule

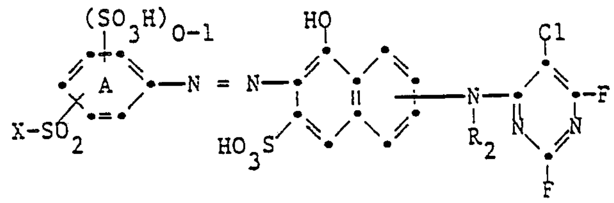

(2)

dans laquelle $R_2$ est un atome d'hydrogène ou le groupe méthyle ou éthyle, X a la signification valable pour la revendication 1, et le noyau benzénique A est éventuellement substitué davantage.

4. Colorants réactifs selon la revendication 2, de formule

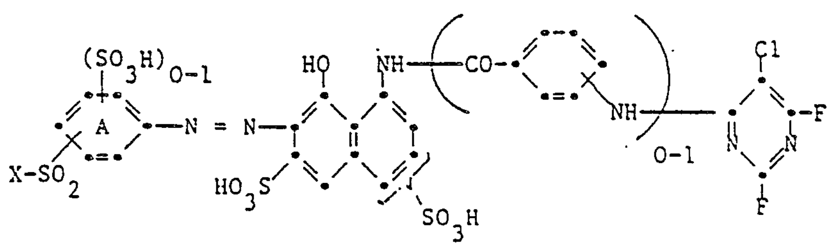

(3)

dans laquelle X a la signification valable pour la revendication 1, et le noyau benzénique A est éventuellement substitué davantage.

5. Colorants réactifs selon la revendication 2, de formule

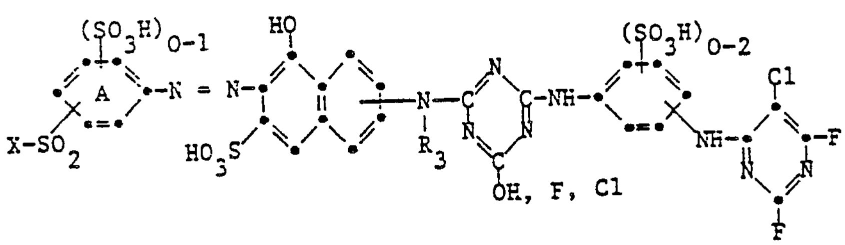

(4)

dans laquelle $R_3$ est un atome d'hydrogène ou le groupe méthyle ou éthyle, X a la signification valable pour la revendication 1, et le noyau benzénique A est éventuellement substitué davantage.

6. Colorants réactifs selon la revendication 2, de formule

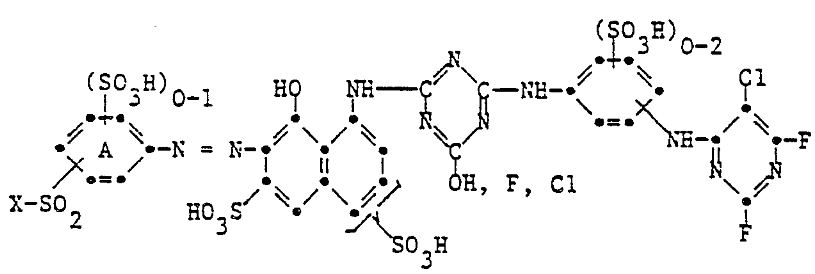

(5)

dans laquelle X a la signification valable pour la revendication 1, et le noyau benzénique A est éventuellement substitué davantage.

7. Colorants réactifs selon la revendication 4, dans lesquels le noyau benzénique A n'est pas substitué davantage.

8. Colorants réactifs selon la revendication 1, dans lesquels X est le groupe vinyle ou β-sulfatoéthyle.

9. Procédé pour la préparation des colorants réactifs selon la revendication 1, caractérisé par le fait que l'on fait réagir avec la 2,4,6-trifluoro-5-chloropyrimidine des colorants de formule

$$(X-SO_2)_{1-2}\!-D-\left[\begin{array}{l}NH\\ |\\ R_1\end{array}\right]_{1-2} \qquad (6)$$

dans laquelle D, $R_1$ et X ont les significations données dans la revendication 1, ou leurs précurseurs, pour aboutir aux colorants réactifs de formule (1), ou l'on transforme les produits intermédiaires obtenus en des colorants finals recherchés, et éventuellement une nouvelle réaction de conversion a lieu ensuite.

10. Utilisation des colorants réactifs selon la revendication 1 pour la teinture ou l'impression de matériaux fibreux cellulosiques.

11. Utilisation selon la revendication 10, pour la teinture ou l'impression du coton.